(19) Europäisches Patentamt / European Patent Office / Office européen des brevets

(11) **EP 3 278 071 B1**

(12) # EUROPEAN PATENT SPECIFICATION

(45) Date of publication and mention of the grant of the patent: **28.07.2021 Bulletin 2021/30**

(21) Application number: **16722939.2**

(22) Date of filing: **01.04.2016**

(51) Int Cl.: ***G01J 3/52*** *(2006.01)*

(86) International application number: **PCT/IB2016/051878**

(87) International publication number: **WO 2016/157148 (06.10.2016 Gazette 2016/40)**

(54) **COLOR CLASSIFICATION SYSTEM**

FARBKLASSFIKATIONSSYSTEM

SYSTEM DE CLASSIFICATION DES COULEURS

(84) Designated Contracting States: **AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2015 BE 201500123**

(43) Date of publication of application: **07.02.2018 Bulletin 2018/06**

(73) Proprietors:
- **Uman360 NV** **2140 Antwerpen (BE)**
- **Color Navigator nv** **2140 Antwerpen (BE)**

(72) Inventors:
- **VAN RENTERGHEM, Luc** **1935 Moerbeke-Waas (BE)**
- **LESCRAUWAET, Thierry** **2140 Borgerhout (BE)**

(74) Representative: **Brantsandpatents bvba** **Pauline Van Pottelsberghelaan 24** **9051 Ghent (BE)**

(56) References cited:
**US-A- 1 617 024** **US-A1- 2009 021 524** **US-B1- 7 180 524**

- **"Systems for precise color validation Defining", , 1 January 2007 (2007-01-01), XP055243947, Retrieved from the Internet: URL:https://www.pantone.com/downloads/articles/pdfs/L10_315_Defining_Color_Munsell_en.pdf [retrieved on 2016-01-22]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL DOMAIN

The present invention relates to a classification system for colors, in which the colors are clustered and classified according to a predefined system.

### STATE OF THE ART

Color is an important aspect in daily life of human beings. Many attempts have been made to analyse and classify the many observable color variations. This is particularly important for people dealing with color in their daily professional life, such as the print industry, the fashion world and many other sectors. There is a need for a system allowing to designate, classify and mutually compare colors in an objective way, so that they can be defined, selected and reproduced in a standardized way.

In the past decades, many efforts have been made to rationalize the identifications, classification and comparison of the colors. A fundamental work that is still generally accepted nowadays, is the Munsell color system, designed by Albert Munsell and described in US1617024. The Munsell system specifies colors based on three characteristics: hue, lightness and chroma. Although it is useful, the Munsell system does no longer meet the current needs and problems arising in relation to the representation, correlation and reproducibility of colors. Moreover, the Munsell system is based only on experimental and intuitive research and lacks a well-founded scientific basis.

The Munsell system has amongst other things been superseded by the CIELAB system, developed by the Commission internationale de l’eclairage. CIELAB describes all the colors visible to the human eye and was created as an independent reference model to be used for the designation and classification of colors. CIELAB is a three-dimensional model, in which three coordinates are assigned to each color, based on lightness (greying), a position between red/magenta and green, and a position between yellow and blue.

US 7 180 524 describes a color-appearance system that organises colors through various charts. The system allows a method for choosing on-screen color elements in a computer system.

A problem with the known classification methods and systems is that fact that they do not sufficiently allow the user to identify, understand, designate, use, harmonize and communicate colors.

The present invention aims to find a solution for of the above-mentioned problem.

There is a need for an improved classification system for colors, in which the unique characteristics of colors and their value, such as culture, style and type, are taken into account. The present invention allows to unambiguously identify and classify colors and to make appropriate combinations. Furthermore, it is an object of the present invention to identify and classify only those colors that have a useful use. Colors within this useful use are captured in a correct way by our brains because they are perceived as sufficiently strong by the color receptors and are not contaminated by too many grey levels.

### SUMMARY OF THE INVENTION

The invention relates to a method for classifying colors and grey shades according to claim 1 and its derived claims. The invention further relates to a color chart according to claim 11 and a computer implemented program according to claim 14. The present invention allows to use colors falling within the useful range of our brains. Colors falling outside this useful range, are not or barely taken into account. The classification is scientifically founded based on the perception of color and color combinations in our brains. By means of the unique classification and designation of colors based on this classification, navigation within the system is made possible, and appropriate combinations and harmonies can be suggested.

### DESCRIPTION OF THE FIGURES

**Figure 1** shows a color circle according to an embodiment of the present invention.

**Figure 2** also shows an embodiment of a color circle according to the present invention and a classification into clusters and families.

**Figure 3** shows a subfamily matrix according to an embodiment of the present invention.

**Figure 4** shows a grey tube according to an embodiment of the present invention and the position with respect to a color circle.

**Figure 5** shows a grey shade matrix according to an embodiment of the present invention.

**Figure 6** shows a color circle according to the present invention, in which the color families are classified according to type and subtype.

**Figure 7** shows a schematic illustration of the classification of the colors according to type and subtype.

**Figure 8** shows an embodiment of a classification of the colors according to type. **Figure 9** shows the scientific background onto which the classification according to type is based.

**Figure 10** shows an embodiment of a classification of the colors according to culture. **Figure 11** shows the scientific background onto which the classification according to culture is based.

**Figure 12** shows the RGB excitation pattern of the color families onto which the classification of the colors is based.

**Figure 13** shows possible combinations and harmonies according to the present invention.

**Figure 13A** is an example of a reproduction of how complements and harmonies can be made within different families.

**Figure 14** is an example of a possible color identification code according to the present invention.

**Figure 15** is an example of possible culture clusters that are relevant per region.

**Figure 16** is an example of a possible color identification tool according to the present invention.

**Figure 17 and 18** show the scientific approach for the classification of colors according to style.

**Figure 19** shows an example of an L-matrix according to an embodiment of the present invention.

**Figure 20** illustrates the location of the L colors with respect to the subfamily matrix to which the L colors belong.

**Figure 21** shows an example of a D-matrix according to an embodiment of the present invention.

**Figure 22** illustrates the location of the L colors with respect to the subfamily matrix to which the L colors belong.

## DETAILED DESCRIPTION

The invention relates to a system for classifying and designating colors, and provides as it were a universal color language and a unique passport for each color, enabling users to communicate with other users, and to use, identify, designate colors and make good combinations and harmonisations. The classification of the colors is scientifically based on the way in which color is perceived by our brains and addresses the 3 xyz stimuli of our brains.

The perception of colors is based on the capacity of our eyes to perceive light in different wave lengths and also to filter these wave lengths. Color can be captured by our eyes via receptors on the retina. There are three kind of receptors: for red, green and blue, also called RGB receptors, ensuring that color is subdivided into a degree of red, green and blue. Thus, the perception of color is essentially a perception by the RGB receptors, that subsequently send a signal to the brains. As a result, some signals and thus some colors will reach the brains earlier than others. This depends on the wave length of a particular color.

In a first aspect, the invention relates to a method for classifying color and grey shades, including the classification of colors in a matrix, in which the position of a color in the matrix is determined by the degree of color degree of saturation of chroma and the degree of greying of the color. In particular, the scale for the degree of color degree of saturation of chroma as well as the scale for the degree of greying will be linear and the scale for the degree of greying will depend on the scale for the degree of color degree of saturation of chroma and will increase directly in proportion to this scale.

The term 'directly in proportion' means that the steps in greying increase equally, that is in equal steps, and that the greying steps are dynamic in function of the color degree of saturation of chroma. The more color (chroma), the larger the greying steps will be.

The color classification systems known till now are all based on a linear greying. The disadvantage is that the useful range of colors is not taken into account. By classifying the colors in the present invention according to the degree of greying and color degree of saturation of chroma (chroma) and by coupling the grey level scale to the scale of the color degree of saturation of chroma, this useful range is always taken into account. Useful range refers to all the colors that have not been excessively greyed and/or darkened and still allow sufficient color perception so that they are perceived by our color receptors and our brains as pleasant. The so-called 'blurred colors' (colors with too much greying) are hereby not considered. This is a complete new way of approaching and classifying colors, in which colors are classified and designated in a scientific way, and based on the perception by the human brain. Moreover, the methodology according to the present invention provides the possibility to navigate between the different colors.

This way of defining not only allows a pleasant perception, but also ensures that it is about perfectly reproducibly colors on most substrates, which is of course very important for many industrial sectors.

The colors within the matrix will in particular be classified by means of a value on the vertical axis, indicating the greying, and a horizontal axis, which is a degree of color degree of saturation of chroma. In another embodiment, the horizontal axis can indicate the greying, while the vertical axis indicates the chroma or color degree of saturation of chroma. The color degree of saturation of chroma is preferably indicated on a scale of 0 to 9, in which 0 stands for the lowest grey level and/or color degree of saturation of chroma and 9 for the highest grey level and/or color degree of saturation of chroma.

The used scale steps will in particular have a size of 10, in which 0 stands for a color degree of saturation of chroma of 10 and 9 a color degree of saturation of chroma of 100.

The vertical axis will more preferably indicate the greying in descending order of greying (from 9 to 0), whereas the horizontal axis determines the color degree of saturation of chroma in ascending order. In this way, the color in the upper right corner of the matrix will be a color without greying, and having full color degree of saturation of chroma.

Colors with a grey level of 0 are considered as pure colors. By adding grey levels, the brightness of the colors will decrease. The inventors have determined the grey level scale in such way that the grey level steps are adjusted to the color degree of saturation of chroma, as a result of which each step cannot be interpreted as cloudy or blurred by our brains by an excessive usage of black.

Colors with a color degree of saturation of chroma/chroma of 0 or 1 are light tones, those with chroma 2 and 3 are soft tones, 4 and 5 are considered as middle tones, 6 and 7 are natural tones and 8 and 9 are deep tones.

This is based on the principle that at a low chroma, the greying reaches its maximum at a much lower level before losing or polluting all of its color and in which colors at a high chroma allow maximum greying to almost 100% (or a luminance of 0 or 1).

In particular, the color matrix will be constituted of 100 colors and form a subfamily. In a further preferred embodiment, a subfamily will be part of a color family, in which the color family contains 2 subfamilies each consisting of 100 colors.

In a preferred embodiment, a color family consists of 200 colors, divided into 2 subfamilies, in which 1 subfamily contains 100 X colors and the second subfamily 100 V colors, in which the Roman X stands for an angle of 10° and the Roman V stands for an angle of 5°. Such classification is important for the precise identification of colors. These minor differences in color angle can be seen as the same color by different people. The system sets off the differences in perception.

The color with the highest color degree of saturation of chroma and smallest grey level will be considered as the main color of a family. In a preferred embodiment according to the present invention, the main color stands on top of the matrix, preferably in the upper right corner. Main colors preferably have a grey level of 0 and a color degree of saturation of chroma of 9.

In a further embodiment, the colors will be classified into segments of a color circle based on their color degree of saturation of chroma and grey level. More in particular, the families are grouped into segments. In a preferred embodiment, each segment covers 60° of the circle, and the segments will be further divided into 6 color families. More in particular, the method will classify 7200 colors and 130 grey shades.

In an embodiment of the present invention, the colors will have a particular similar shape of wave length curve with one segment and the segments on the circle will follow counterclockwise. Hereby, segment 1 will contain the colors that are first perceived by the brains, in which segment 2, 3, 4, 5 and 6 contain colors perceived in descending order. In a preferred embodiment, the first segment starts at the 0° axis, and covers a region of 60° counterclockwise.

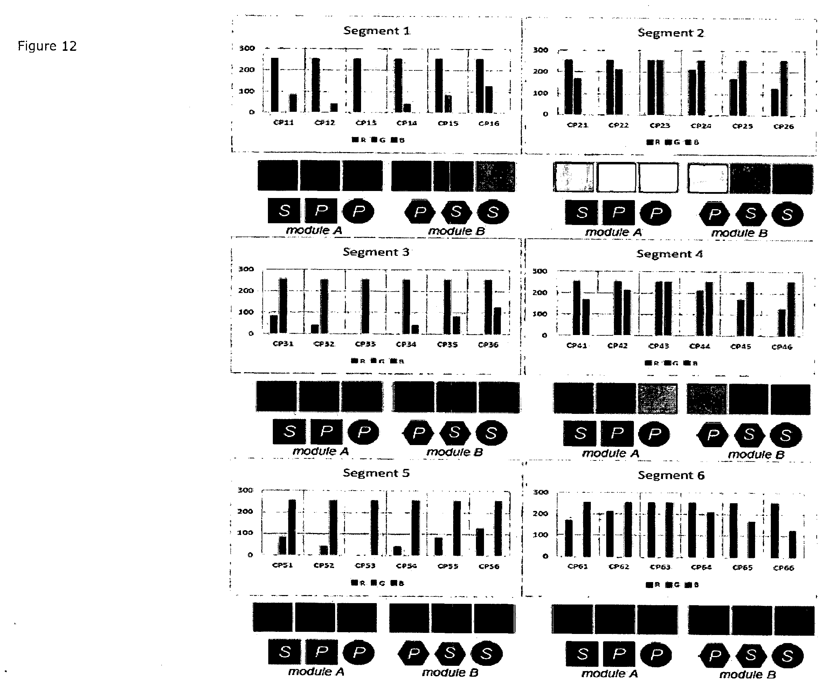

In a preferred embodiment, each segment is further subdivided in two modules each covering an angle of 30°. Each module preferably consists of three color families. These modules are important for harmonizing and combining colors. Each module is preferably separated by a clear demarcation. Based on spectral analyses and color psychology, the inventors have found that combining colors from different modules in one same segment is not always desirable, as well as a combination of colors form adjacent modules. This can be explained by the fact that the modules are situated at turning points of a primary color in which the main influence of one of the primary switches to the influence of a next primary. The colors can therefore be perceived as blurred by our brains. These turning points are clearly indicated in the graphs in figure 12 (see below). The demarcations on the color circle correspond to these turning points.

As mentioned, each segment will be further divided into color families. Each segment will preferably contain 6 color families (the section of a color circle). In this way, there will be 36 color families in total, each consisting of 200 colors. Each color family will preferably have a range of 10° on the color circle.

The division into segments, modules and families is based on the excitation of the RGB receptors by the colors. More specifications are given in figure 12 and its description.

In a preferred embodiment, a parameter will be assigned to each family, in which the parameter is an indication of the position of the family on the circle and/or of the color angle or hue of the family. In a preferred embodiment, this parameter will contain a dual number, in which the first figure of the number corresponds to the segment to which the family belongs (preferably 1 to 6) and the second figure relates to the classification of the family in that segment.

In a further embodiment, the main colors will be indicated on the outer scale of the color circle, as a representation of the family to which they belong. The colors on the other scales situated more to the inside, are the colors with the same color angle as the main color, but preferably with a similar greying scale, for example 5 (see below).

An identification code or parameter will preferably be assigned to each color, in which this code/parameter contains a reference to the grey level and chroma/color degree of saturation of chroma. Combined with a reference to the color family and/or subfamily, this will enable the user to identify a color in an unambiguous way, and to classify it on a color chart according to the present invention. The combination allows a simple navigation on the color chart.

In a preferred embodiment, the colors belonging to a color (sub)family will be classified into color clusters. Such color clusters contain 4 colors, in which the colors in one cluster can differ at maximum one grey level degree and/or one color degree of saturation of chroma degree from each other. This indicates the smallest perceivable difference between two colors. When individuals will perceive these colors separately, there will be no perceivable difference between these colors and these colors will be indicated as identical (although there is a difference). The colors in the cluster are preferably classified in a grid, in which the colors are situated in the four corners of the grid and are classified according to ascending color degree of saturation of chroma and descending grey levels.

Each cluster will hereby contain one main color. The main color of a cluster is determined as the color of the cluster with the highest color degree of saturation of chroma and the lowest grey level. In a preferred embodiment, the main color of a cluster will be situated in the upper right corner of the color cluster.

In a preferred embodiment, the main colors of the clusters with the highest color degree of saturation of chroma (preferably value 9) will be projected to the color circle according to the present invention. As mentioned, the outer scale will project the main color of the family, in which the scales situated more to the centre will contain the cluster main colors having the same color degree of saturation of chroma as the family main color, but with a higher grey level. Colors with higher grey levels will eventually be situated more to the centre of the circle.

The sector describing the middle point of the color circle, will contain the grey shades. In a preferred embodiment, 130 grey shades will be classified in this sector. The 130 hues can be subdivided into 120 grey shades that are influenced by a color and 10 hues in the neutral theoretical middle point of the circle. This sector will preferably be indicated as the grey tube. The color degree of saturation of chroma at these grey shades will be (almost) nil. In particular, the grey shades will be classified into a grey shade matrix, in which the axes are preferably divided into a scale of 0 to 9. Horizontally, the grey shades in the matrix will be classified according to color influence (of each main color of a module A or B), while the vertical scale is influenced by the grey level. A grey shade identification code will consist of a reference to the family and the degree of greying.

By means of the present invention, it is possible, based on the position on the color chart (and thus based on the color identification code), to calculate the characteristics of a particular color. More in particular one will be able to determine the chroma, the luminance, the hue and grey level of a color based on the family, the segment and the chroma scale of a color. In this way, the unique color identification code of a color does not only offer a unambiguous way of communicating about colors, but also offers a way to position a color on the color chart according to the present invention (so-called color navigation) and to determine the characteristics of the color.

This also allows navigation on the color circle.

Via the present invention, the hue of a color can be calculated as follows:

$$\text{Hue} = (S-1) \times 60 + F \times 10$$

In which S is the segment of the color on the color chart and F is the order of the family within this segment.

The chroma/color degree of saturation of chroma C of a color can be determined as follows:

$$C = (CS + 1) \times 10$$

In which CS is the chroma scale in the system (the horizontal axis).

The luminance L of a color is determined as follows by means of the present invention

$$L = 100 - (CS + 2) \times VS$$

In which CS is the chroma scale in the system and VS is the grey scale.

The grey level V is in turn calculated as follows:

$$V = (CS + 2) \times VS$$

In which CS is the chroma scale and VS is the grey scale (vertical axis). The grey level V is hereby inverse to the luminance L on a scale of 100.

When we apply this to an example of a color with color identification code CP 2647, in which 2 stands for the segment, 6 stands for the sixth family within this segment, 4 stands for the degree of greying and 7 for the chroma, one can calculate the following values as follows:

$$H = (2-1) \times 60 + (6*10) = 120$$

$$C = (7 + 1) \times 10 = 80$$

$$L = 100 - (7 + 2) \times 4 = 64$$

The method and the color chart according to the present invention rely on a greying that is in relation to the color degree of saturation of chroma/chroma. As a result, only colors that have not been blurred, are perceived as better in our brains with a better color perception and less pollution.

Table 1 shows a mathematical example of a color matrix of subfamily 3 from segment 1, in which the horizontal axis is the degree of color degree of saturation of chroma (scale from 0 to 9, in steps of 10) and the vertical axis is the degree of greying (scale from 0 to 9), in which the chroma and the luminance is given for each color. By means of the luminance, the exact grey level of the color can subsequently be determined (100-L).

When a color has little chroma, it will reach its maximum visible equilibrium at a low grey level. Then, it will become a grey color and it will be classified in the grey tube (see below). Too much grey will mean a disequilibrium for the color receptors, as a result of which our brains will not or difficultly be able to process it (so-called blurred colors). A color with a strong chroma can cope with a much higher degree of greying. This will be clear when we compare the color with a low chroma (first column) from table 1 with a color with a strong chroma in the right column. The latter colors can cope with a much higher grey level, which can still be processed by our brains.

The values for luminance and chroma, as indicated in Table 1, can be derived from the position of the color in the matrix. The color with a degree of greying of 3 and a degree for chroma 6 from family 13, will for example have a luminance of 76 ($L = 100 - (CS + 2) \times V S$) and a chroma of 70 ($C = (CS +1) \times 10$).

**Table 1 The color matrix gives the ratio of the luminance L to the chroma C**

| Color subfamily 13 | | 0 | 1 | 2 | 3 | 4 | 5 | 6 | 7 | 8 | 9 |
|---|---|---|---|---|---|---|---|---|---|---|---|
| C | | 10 | 20 | 30 | 40 | 50 | 60 | 70 | 80 | 90 | 100 |
| L | 0 | 100 | 100 | 100 | 100 | 100 | 100 | 100 | 100 | 100 | 100 |
| C | | 10 | 20 | 30 | 40 | 50 | 60 | 70 | 80 | 90 | 100 |
| L | 1 | 98 | 97 | 96 | 95 | 94 | 93 | 92 | 91 | 90 | 89 |
| C | | 10 | 20 | 30 | 40 | 50 | 60 | 70 | 80 | 90 | 100 |
| L | 2 | 96 | 94 | 92 | 90 | 88 | 86 | 84 | 82 | 80 | 78 |
| C | | 10 | 20 | 30 | 40 | 50 | 60 | 70 | 80 | 90 | 100 |
| L | 3 | 94 | 91 | 88 | 85 | 82 | 79 | 76 | 73 | 70 | 67 |
| C | | 10 | 20 | 30 | 40 | 50 | 60 | 70 | 80 | 90 | 100 |
| L | 4 | 92 | 88 | 84 | 80 | 76 | 72 | 68 | 64 | 60 | 56 |
| C | | 10 | 20 | 30 | 40 | 50 | 60 | 70 | 80 | 90 | 100 |
| L | 5 | 90 | 85 | 80 | 75 | 70 | 65 | 60 | 55 | 50 | 45 |
| C | | 10 | 20 | 30 | 40 | 50 | 60 | 70 | 80 | 90 | 100 |
| L | 6 | 88 | 82 | 76 | 70 | 64 | 58 | 52 | 46 | 40 | 34 |
| C | | 10 | 20 | 30 | 40 | 50 | 60 | 70 | 80 | 90 | 100 |
| L | 7 | 86 | 79 | 72 | 65 | 58 | 51 | 44 | 37 | 30 | 23 |
| C | | 10 | 20 | 30 | 40 | 50 | 60 | 70 | 80 | 90 | 100 |
| L | 8 | 84 | 76 | 68 | 60 | 52 | 44 | 36 | 28 | 20 | 12 |
| C | | 10 | 20 | 30 | 40 | 50 | 60 | 70 | 80 | 90 | 100 |
| L | 9 | 82 | 73 | 64 | 55 | 46 | 37 | 28 | 19 | 10 | 1 |

As indicated, the chroma scale changes linearly with steps of 10. The greying scale also changes linearly, but the steps are hereby dynamic based on the chroma. The steps will be increased equally with the chroma steps. Colors with much chroma will be able to process much more greying than colors with little chroma. At colors with a chroma scale of zero (chroma 10), the greying occurs in the vertical direction in steps of -2 on a scale of 0 to 9. At colors with a chroma of 20, the greying occurs in steps of -3, at a chroma of 30 in steps of -4, etc. The difference in step size can also be derived from the greying scale. Colors with a chroma scale of 0 will have a greying in steps of -2 in the vertical direction, the steps in the following chroma scales extend in the horizontal direction according to the greying scale (the row value of the matrix, thus steps to the right).

By means of the method, the color chart and the color identification code according to the present invention, a correlation of the RGB standard system can also be calculated or determined. This allows to identify colors that are initially designated by another system, without any problem within the color chart according to the present method. Moreover, this possibility of converting to RGB allows to apply the present invention to digital applications.

Table 2 illustrates the calculation of the RGB values by means of the present invention (for 100 chroma).

**Table 2 Calculation of RGB values (100 chroma)**

| F | 13(0-30) | 14(10-40) | 15(20-50) | 16(30-60) | 21(40-70) | 22(50-80) |
|---|---|---|---|---|---|---|
| | 100 | 100 | 100 | 100 | 100 | 100 |
| R | 255 | 255 | 255 | 255 | 255 | 255 |
| G | 0 | 42 | 85 | 127 | 170 | 212 |
| B | 0 | 0 | 0 | 0 | 0 | 0 |
| F | 23(60-90) | 24(70-100) | 25(80-110) | 26(90-120) | 31(100-130) | 32(110-140) |
| | 100 | 100 | 100 | 100 | 100 | 100 |
| R | 255 | 212 | 170 | 127 | 85 | 42 |
| G | 255 | 255 | 255 | 255 | 255 | 255 |
| B | 0 | 0 | 0 | 0 | 0 | 0 |
| F | 33(120-150) | 34(130-160) | 35(140-170) | 36(150-180) | 41(160-190) | 42(170-200) |
| | 100 | 100 | 100 | 100 | 100 | 100 |
| R | 0 | 0 | 0 | 0 | 0 | 0 |
| G | 255 | 255 | 255 | 255 | 255 | 255 |
| B | 0 | 42 | 85 | 127 | 170 | 212 |
| F | 43(180-210) | 44(190-220) | 45(200-230) | 46(210-240) | 51(-220-250) | 52(230-260) |
| | 100 | 100 | 100 | 100 | 100 | 100 |
| R | 0 | 0 | 0 | 0 | 0 | 0 |
| G | 255 | 212 | 170 | 127 | 85 | 42 |
| B | 255 | 255 | 255 | 255 | 255 | 255 |
| F | 53(240-270) | 54(250-280) | 55(260-290) | 56(270-300) | 61(280-310) | 62(290-320) |
| | 100 | 100 | 100 | 100 | 100 | 100 |
| R | 0 | 42 | 85 | 127 | 170 | 212 |
| G | 0 | 0 | 0 | 0 | 0 | 0 |
| B | 255 | 255 | 255 | 255 | 255 | 255 |
| F | 63(300-330) | 64(310-340) | 65(320-350) | 66(330-0) | 11(340-10) | 12(350-20) |
| | 100 | 100 | 100 | 100 | 100 | 100 |
| R | 255 | 255 | 255 | 255 | 255 | 255 |
| G | 0 | 0 | 0 | 0 | 0 | 0 |
| B | 255 | 212 | 170 | 127 | 85 | 42 |

Colors with a low chroma will be more strongly influenced by the greying steps. To compensate this, an additional matrix of light and dark tones is also introduced in the present invention, in which the impact of greying on the colors is taken into account.

In particular, for each color subfamily X according to the present invention, an additional Light (L) matrix will also be provided with lighter tones. This matrix is situated partly outside the family matrix as discussed above, preferably left from the colors with 0 chroma (chroma value 10) and between 0 and 1 chroma colors (chroma 20). This Light Matrix, that is provided for each subfamily X, will preferably contain 100 colors that are classified on the matrix based on chroma and grey level, just like for the family matrix. Here also, the steps of chroma will be equal steps, and there will be a unique ratio between chroma and grey, in which the grey levels equally increase with the chroma steps.

Next to an L matrix, there will also be a D (dark) matrix with dark colors for each subfamily with X colors. Dark colors are hereby defined as colors that overstimulate the brains as 'blurred' colors and thus in theory fall outside the useful range. However, for some practical applications and industries, it appears that these colors still fulfil a function and are important.

The colors present in the D matrix are preferably situated at the chroma 0 to chroma 5, in which the grey levels are located under the X matrix. The D matrix will preferably provide 100 D colors, classified on the matrix by means of chroma and grey level. Here also, the chroma steps will increase equally (beginning at chroma 5) and there will be a unique ratio between chroma and grey, in which the grey levels increase equally with the chroma steps and in which the greying per chroma step does not exceed the blurred grey levels at the X matrix. All greyings at each chroma step will preferably not exceed the non-blurred grey levels at the X matrix.

To allow a user to make the correct combinations and to determine harmonies, the colors and/or colors clusters will also be grouped according to certain characteristics (e.g. emotions) and regional preferences. The classification is based on the degree in which the XYZ stimuli are appealed by our brains.

In particular, color clusters can be grouped according to a type, in which the different types are determined by the inherent characteristics of the colors belonging to the type. Preferably, 5 types can be identified, based on a specific greying, brightness and/or color degree of saturation of chroma. Each color cluster within a (sub)family can be assigned to a particular type. Preferably, the identification code of a color will, next to a reference to the (sub)family, to which it belongs and the degree of greying and color degree of saturation of chroma, also contain a reference to the kind of type. This can be indicated in many different ways, for example by a number, a letter code of a symbol. Preferably a symbol is used.

In particular, the following types can be present:

- Type I, also called neutral types, with colors with a low color degree of saturation of chroma (e.g. scale 0 and 1) and/or that are highly greyed (e.g. scale 8 and 9). Colors of type I can be used everywhere.
- Type II, also called discrete type, are colors with a low grey level, a high brightness and a low to moderate color degree of saturation of chroma.
- Type III, also called energetic type, are colors with a low grey level, a high brightness and a strong color degree of saturation of chroma.
- Type IV, also called basic colors, have a moderate grey level and a low color degree of saturation of chroma.
- Type V, also called traditional colors, have a moderate to strong grey level, a low brightness and a moderate to high color degree of saturation of chroma.

In particular, these types will be clustered at a fixed position within each family. This is amongst other things due to the specific steps in greying which is so characteristic of the present invention. These greying steps (based on chroma) allow to apply identical clustering within all families.

The classification in types of degrees allow a user to make appropriate combinations. A color of the discrete type can for example be combined with a complementary color of the energetic type.

Next to the grouping into types, the present invention also provides a grouping of color (sub)families per style. The classification into style is based on the construction of a color and how this is determined by our brains via the RGB receptors. As the name says, the classification into style allows to choose colors that are considered as part to the same style or appearance. This can for example be important for brand creation. The classification into style allows to combine colors from (sub)families and in this way to create a same appearance or atmosphere.

In particular, two styles can be identified within the family, that can in turn be subdivided into substyles.

A first main style contains all second, third and fourth families within a segment. Preferably, this is indicated by the same name or symbol (e.g. Primary). This main style is further subdivided into three styles, in which all families with a similar position within the different segments can be subdivided into the substyles.

A first substyle will contain all third families from a segment (families of which the parameter ends in a 3). The inventors of the present invention have found that these colors enter into the brains in full intensity. This is primarily due to the construction of the colors: they are composed of one or two RGB receptors in full color degree of saturation of chroma. They are beautiful bright colors, but they are not composed of layers. The families from the even segments are composed of two receptors, while these from the uneven segments are composed of one single receptor.

As a result, these colors are easily recognized by most people, but they evoke little emotion. These colors are also each the first color of a submodule.

The second substyle within the first main style subsequently contains all second families from the segments, while all fourth families from the segments are classified in the third substyle.

A second main style contains all first, fifth and sixth families within a segment. This main style is further subdivided into three substyles.

A first substyle will contain all sixth families within the different segments. This are colors that are perceived as very much layered and that evoke emotion (contrary to the first style). This emotion is due to the construction of the colors from the substyle, i.e. one receptor at 100% and one receptor at 50%.

A second substyle contains all first families from a segment. These are colors that show less emotion and are less eye-catching.

A third substyle contains all fifth families from a segment. These are colors that are perceived as natural and intense, without losing its sensitive aspect. They are often associated with leisure time.

Preferably, a color identification code will contain a reference to the style group to which the color belongs.

Next to a classification into style and color cluster, colors can also be grouped based on culture. Grouping based on culture aims to better understand which colors function well or not well in which regions. The six different culture clusters give colors groups with the same characteristics, regional preferences and influence sphere.

This classification according to culture is based on natural earth currents and general characteristics of a region, on a mix of historical, geographical, climatological, economic, political and religious influences.

Some regions combine different color profiles and therefore fall within more than one culture. These are countries that historically have undergone many different influences as a result of for example colonisation or immigration.

In a preferred embodiment according to the present invention, the colors will be subdivided into six culture groups.

A first culture group contains the universal colors, that can be used everywhere and do not have a particular emotion. In particular, they correspond to the color clusters in the two outmost corners and completely in the middle of the matrix. At the one side, the colors with a minimum color degree of saturation of chroma and a minimum grey level, at the other side a maximum color, but strongly influenced and dimmed by a maximum grey level. The universal color cluster that is exactly in the middle of the matrix, has a steady balance between color degree of saturation of chroma and a moderate grey level. These colors can without any risk be used universally.

A second culture group are natural and mild colors. These are common colors in the United Kingdom and Scandinavia.

A third culture group are pure and natural colors with a low grey level and thus a high brightness. This are typical southern colors that are common in regions where the sun is high such as the South of Europe and the South of America.

A fourth culture group are colors with a moderate to strong grey level and a relatively low color degree of saturation of chroma.

Finally, there are two culture groups that are between the other culture groups:
A fifth culture group are colors with a moderate to high color degree of saturation of chroma and a low to moderate grey level.

A sixth culture group are colors with a low to moderate color degree of saturation of chroma and a moderate grey level.

Preferably, a color identification code will contain a reference to the culture group to which it belongs. As with the classification into types, the culture clusters will have a fixed position within a family, that can be extrapolated to other families. This is again due to the unique way in which greying is taken into account in the present invention.

In a second aspect according to the present invention, the invention also relates to a color chart for classifying colors and grey shades. By means of the color chart, a color can unambiguously be identified and the appropriate combinations and harmonisations can be made. Navigation on the color chart is simplified.

In particular, the color chart will contain a matrix in which the position of a color in the matrix is determined by the degree of color degree of saturation of chroma and the degree of greying of the color, in which the scale for the degree of color degree of saturation of chroma and greying is linear. The scale for the degree of greying depends on the scale for the degree of color degree of saturation of chroma and is directly proportional to this scale, in which the greying steps are dynamic based on the color degree of saturation of chroma. In particular, the vertical axis of the matrix will indicate the degree of greying and the horizontal axis the degree of color degree of saturation of chroma. More in particular, the scale for the degree of color degree of saturation of chroma will change in steps of 10, in which 10 is the minimum and 100 is the maximum.

As indicated, the matrix will consist of 100 colors that together form a color subfamily. Such a color subfamily is part of a color family, that contains two subfamilies with a color angle (hue) of 5°. The families are part of segments.

Next to a matrix per color subfamily, the color chart in a preferred embodiment is provided with a matrix for Light (L) and Dark (D) colors as described above. These are provided per color family X.

In particular, such a color chart contains a color circle containing segments, in which these segments each cover 60° of the circle, and in which the segments contain colors that are assigned to a segment based on its color degree of saturation of chroma and its grey level and in which each segment is subdivided into color families, each family consisting of 200 colors. This family is subsequently subdivided into two subfamilies X and V, each differing in a color angle of 5°.

Preferably; the segments will follow each other counterclockwise, and are arranged in order of perception of color by the brains. In a further preferred embodiment, the segments are subdivided into two modules, each covering an angle of 30° of the segment.

Preferably, the modules are separated by a demarcation. This is important because it has been shown that adjacent modules cannot be combined in order to avoid color blurring of the colors in the brains.

The color circle according to the present invention is further divided into 4 quadrants. These quadrants can be used to determine color classes in a group of consumers (cf. autumn, winter, spring, summer type).

Preferably, the color chart will contain 7200 classified colors and 130 grey shades (including white and black).

In a further preferred embodiment according to the present invention, the system will in all contain or classify 14530 colors, of which 3600 X colors, 3600 V colors, 3600 light colors (L colors), 3600 dark colors (D colors) and 130 grey levels (including black and grey). Preferably, the color with the highest color degree of saturation of chroma and lowest grey level within a family will be the main color of the family and will be shown on the outer scale of the color circle representing the family.

The color chart according to the present invention will show color clusters, in which each color cluster contains 4 colors, of which the colors in one color cluster differ at most one grey level scale and/or one color degree of saturation of chroma scale from each other.

Furthermore, the color chart will also contain type clusters, in which each type cluster contains two or more color clusters, in which the types are determined by the degree of greying, brightness and color degree of saturation of chroma.

In another or further embodiment, the color chart contains culture clusters, in which each culture cluster contains one or more color clusters, grouped based on regional preferences and influences.

Still according to another or further embodiment, the color chart contains style clusters, in which each style cluster contains two or more families, in which the classification into style clusters is based on the degree of stimulation of one of more RGB receptors. The grouping of colors as indicated above, helps to determine appropriate combinations and harmonies.

In a third aspect, the present specification also relates to a color identification code, that is unique for a color. This identification code functions as a kind of universal and unambiguous designation of a color, ensuring that people can communicate with each other about color and that they can univocally designate a color. Moreover, the color identification code allows to correctly position the color on the color chart (navigation) and to calculate, by means of the color identification code, values such as chroma, luminance and hue. The color identification code according to the present specification preferably contains a reference to the color (sub)family to which the color belongs and also preferably contains a degree of color intensity, in which the degree of color intensity contains a degree of greying and a degree of color degree of saturation of chroma of the color. In the case of a dark (D) or light (L) color, the color identification code will indicate this, as well as preferably the (sub)family, the grey level and the chroma.

In a further embodiment, the identification code also refers to the hue of the color. In particular, the code will also contain one or more references to the style cluster, type cluster and/or culture cluster to which the color belongs. This can be indicated via specific symbols that are unique for each type, style and/or culture. For D and L colors, the type will always be neutral and the culture will be universal. This allows a user to make appropriate color combinations, based on the code. The identification code allows easy navigation within the color circle. In this way, one will be able to easily determine a complement by adding or subtracting a value 30 to or from the family number. In the case of a triad, this becomes +20, a multi color 6-tones is obtained by adding or subtracting 10. This makes the present code unique and very user-friendly.

The code according to the present specification is not only a means of communication, but also allows the user to classify the color in an unambiguous way on the color chart according to the present specification.

The present invention also relates to a method for combining, harmonizing and/or nuancing a color, in which use is made of the color chart and/or color identification code according to the invention. This can be done manually or by means of a computer implemented program, comprising an interface for identifying, classifying, combining, harmonizing and/or nuancing color. Hereby, not only perfect complements will be able to be combined, the present invention also allows to determine the acceptable complement, by extension a complete family V and X.

Each color has its own feeling and meaning. However, as soon as two or more colors are combined, a new entity is created that can give us for example a pleasant, fresh, melancholic or on the contrary confused feeling. A particular color combination can appeal actual associations, emotions and atmosphere.

Our preference for or rejection of a particular color combination is partly personal and has to do with our color memory, with a particular combination we have, as a result of particular associations, less good experiences than with others. Next to this personal preference, there are however some universal laws for combining colors.

The fact that one color combination feels more balanced than the other can especially be explained scientifically. Our brains are namely constantly looking for an equilibrium and tend to complete a color with its complement. For example, when you look at the yellow color for a long time and then close your eyes, you will see a blue afterimage.

That is why we experience combinations of complementary colors as pleasant, because it is as if they complete each other.

The present invention helps to find the correct combinations, that are experienced as 'pleasant' by our brains. Next to a correct combination, the proportion in which colors are used, also plays a role. If two complementary colors are used in equal proportions, they compete for our attention. Consequently, our brains run wild and do not know which color is dominant. As a result, the intended result is annulled. The best proportion is ¼ versus ¾, that is to use one of the two colors as an accent color.

A combination can be composed of colors with the same color intensity. However, this combination does not always give a harmonious feeling, because sometimes it can be monotonous. Combining different color intensities will result in a livelier, more attractive and thus more interesting image.

The present invention makes it easier to make harmonious combinations also thanks to computer implemented tools.

In an embodiment of the present invention, the computer implemented program will contain a tool for isolating particular colors per cluster or course and representing appropriate combinations and layered harmonisations, also taking into account possible preferences of the user. In this way, it still becomes more convenient and easy to choose. The present invention provides the first color system in which working with modules and combining colors is based on characteristics.

In another or further embodiment, the present invention will provide a color identification tool for identifying and classifying a color (e.g. according to family, segment, color cluster, ...). In a preferred embodiment, the color identification tool will contain means enabling the user to identify a color, as well as its related parameters. Such means can amongst other things be a color meter that can carry out spectral measurements, a camera or an optical eye. A user can for example hold the color identification tool against a particular object (e.g. a fabric) and thus identify the different color shades. In a further embodiment, the identification tool will be provided with means to isolate a cluster of color on a white and black background.

The present invention allows profiling by means of the color, in which for a particular range of products, brands, etc., an identity can be built by means of a specific usage of colors. Hereby, it is ensured that the color range that is used, is consistently recognized by the brains. Also, by means of the usage of the specific modules and/or clusters, a particular type of clients and the characteristics/expectations of these clients can be anticipated. The present invention is thus extremely appropriate for use in brand and/or product creation.

In the following, the invention will be described by means of non-limiting examples and figures illustrating the invention, and not meant to be interpreted as limiting the scope of the invention.

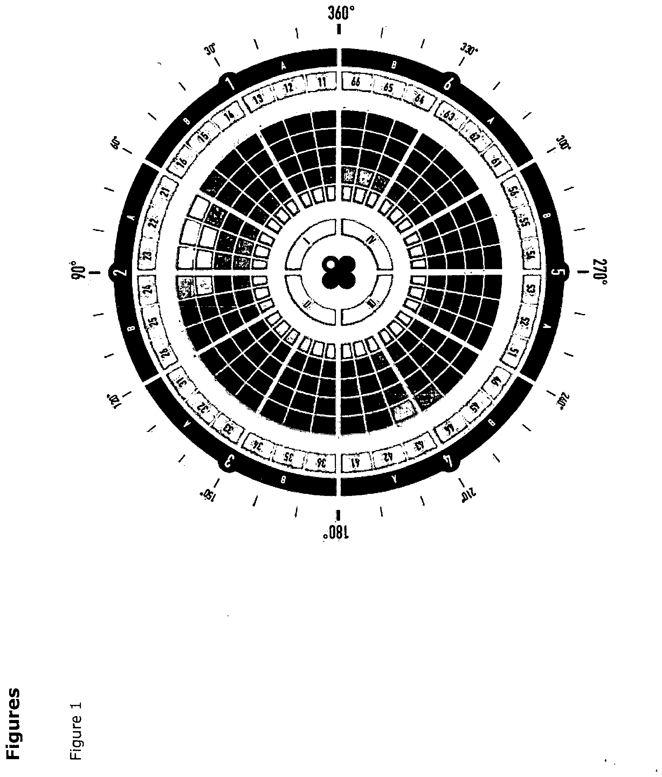

Figure 1 shows a color circle 1 according to an embodiment of the present invention. The color circle is subdivided into 4 quadrants I, II, III, IV, 6 segments 1 till 6 each of 60°. Each segment is subsequently divided into 2 modules A and B of 30°. The segments consist of 6 color families, 3 for each module, each covering 10° of the circle. The segments follow each other counterclockwise, in which the first segment is the segment containing colors that are first perceived in the brains. The families are also subdivided counterclockwise and designated, preferably by a code consisting of two numbers, in which the first number stands for the segment to which the family belongs and the second figure for the classification of the family itself within that segment.

The segments and modules are separated by a demarcation, in the example of figure 1 a white line. This demarcation is important for combining colors and determining harmonisations.

The color circle 1 is subdivided into 6 scales or rings, in which the outer scale or ring represents the main color of a family. The scales or rings that are situated inside, comprise the cluster main colors having the same color degree of saturation of chroma as the family main color, but with a higher grey level. Colors with higher grey levels will be situated more to the centre of the circle.

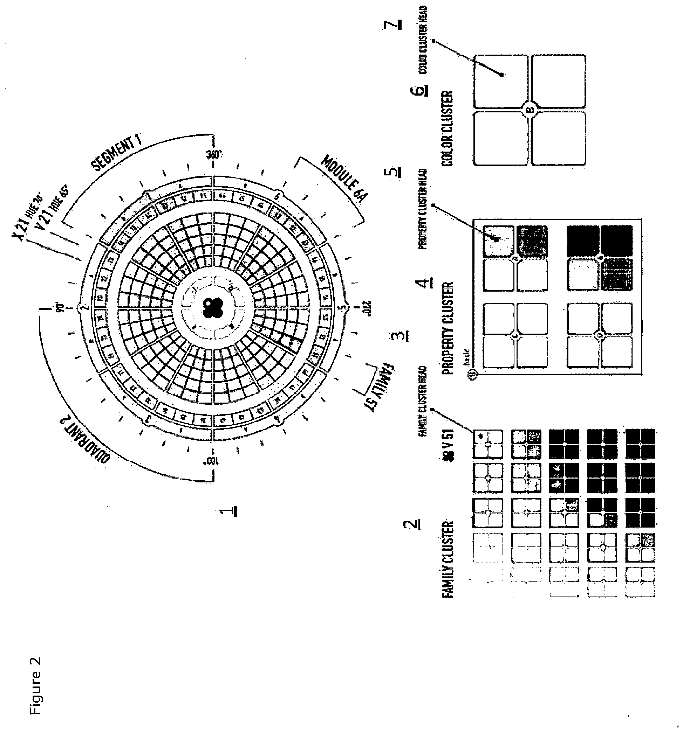

Figure 2 shows another, more schematic illustration of a color circle according to the present invention. Via the classification according to the present invention, 7200 colors and 130 grey shades will be classified into a color chart. These colors are subdivided into 36 families. In a preferred embodiment, each family will be composed of two subfamily, in which a subfamily is divided into a matrix 2. This matrix consists of 25 color clusters 6 of which the colors in a color cluster differ maximum one grey level and/or one color degree of saturation of chroma from each other. The color in the upper right corner of the color cluster is indicated as the main color of the cluster 7.

The colors can further also be classified according to characteristic, such as culture or type. Cluster 4 is an example of such a grouping, in which color 5 is the head of the cluster.

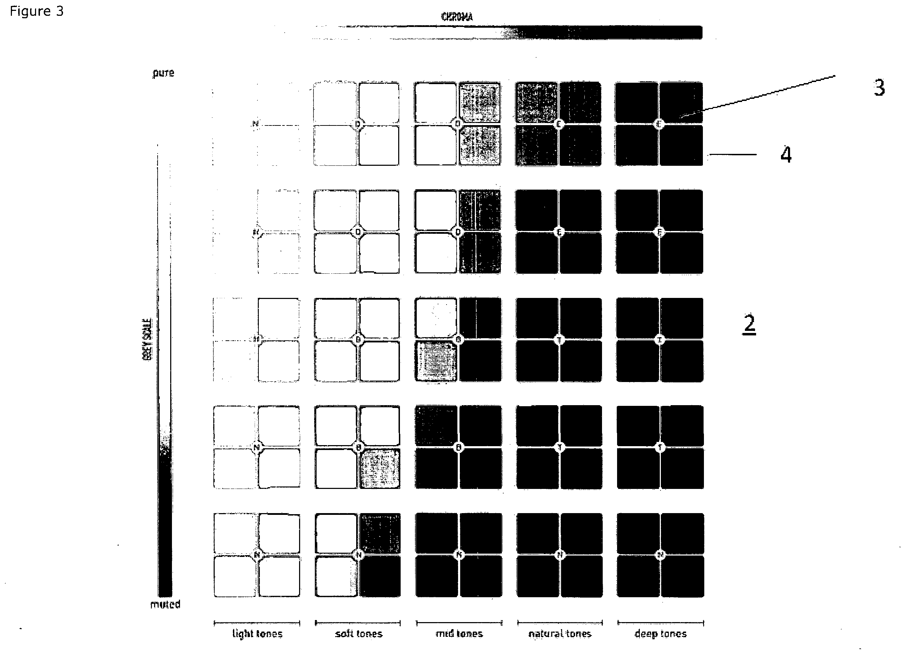

Figure 3 is a more detailed illustration of a classification of a subfamily into a matrix 2, in which the colors are classified according to a vertical grey level axis and a horizontal color degree of saturation of chroma axis. Both axes have a scale of 0 to 9, in which for the color degree of saturation of chroma, each step corresponds to a magnification in color degree of saturation of chroma of 10. The greying steps vary per column from -2 to -11 dependent on the chroma/color degree of saturation of chroma. Greying will herby decrease with an ascending Y axis, while color degree of saturation of chroma increases in the direction of the X axis. The steps for greying will hereby depend on the color degree of saturation of chroma, which is a unique proportion in the field of color classification.

The color with the highest chroma and the lowest grey level will in the matrix be indicated as the main color of the matrix and also of the subfamily suggested schematically by the matrix.

The colors in the matrix 2 will each have the same color angle (hue).

In the matrix 2, the colors will also be subdivided into color clusters 4, a matrix will preferably contain 25 color cluster, and in total thus 100 colors per subfamily.

Figure 12 shows the scientific explanation behind the classification into segments and the order of the families. Figure 12 shows a graph per segment, in which the RGB values of each family of this segment are represented.

Colors from segment 1 have a high R value and a low G or B value. Family 1 and 2 from segment 1 have a low B value, that decreases from family 1 to 2. For family 3, the B value is low to zero. This is module A. Families 4 to 6 included from module B contain an ascending G value.

Colors from segment 2 have a relative high R and G value. The first three families (module A) from segment 2 have a high, similar R value and a high G value ascending from family 1 to a maximum in family 3. Families 4 to 6 included retain the maximum G value, while the R value decreases from family 4 to 6 (minimum at 6) (module B).

Colors from segment three have a high, relatively constant G value and a low R or B value. Families 1 up to and including 6 all have a relatively constant G value. Families 1 and 2 have a low R value that decreases. In family 3, this R value is almost nil. Families 1 up to and including 3 constitute module A. As from family 4 till 6, an ascending B value is observed (module B).

Colors from segment 4 have a high G and B value. The G value remain almost constant in families 1 up to and including 3 (module A), while the B value in these families increases to a maximum in 3. In families 4 up to and including 5, this maximum B value is maintained, while G decreases to a minimum in 6 (module B).

Colors from segment 5 have a high B value and a low G or R value. The B value remains almost constant in families 1 up to and including 6, while family 1 and 2 have a low, decreasing G value, that becomes nil in family 3 (module A). Families 4 up to and including 6 have an R value that increases in an upward trend (module B).

Colors from segment 6 have a high B and G value. The B value is almost constant in families 1 up to and including 3, while the R value increases to a maximum in 3 (module A). In families 4 up to and including 6, this R value remains constant, while the B value decreases (module B).

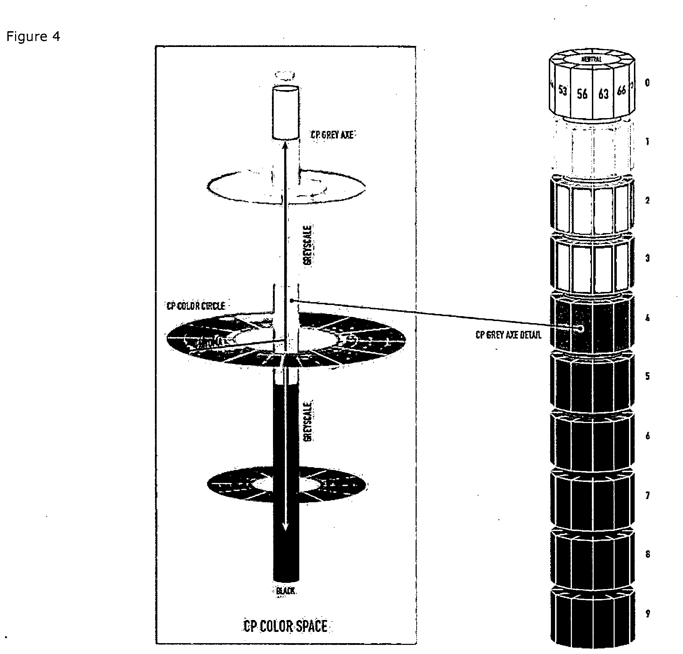

The demarcations on the color circle between the different modules correspond to the spectral turning line as can be derived from figure 12. Hereby, the main influence on a color will thus switch to the next primary color by one of the three primaries (R, G, B). The color chart according to the present invention also consists of 130 grey shades. In an embodiment according to the present invention, these grey shades are classified on a grey tube 8 as shown in figure 4. Completely in the middle of the color circle 1, there is little color and much grey. The grey tube 8 is situated here. The grey shades of the grey tube are in reality colors falling outside the matrix 2 of the color subfamilies, preferably at the left outside, where the color degree of saturation of chroma is nil. Completely in the middle of the circle, we find neutral white and neutral black with in between eight grey shades where there is no color at all. This are the 10 neutral grey shades. The 120 remaining hues of grey are slightly influenced by a minimum of perceivable color.

In the present invention, these are mapped according to the influence of a family head of a module A or B of a segment, in which the head of the modules is the family that is the first family of a module, seen in clockwise direction (in figure 1, this is family 13, 16, 23, 26, 33, 36, 43, 46, 53, 56, 63 and 66). In this way, the influence of the grey shades of the gray scales are clearly perceivable. With the influence of red in CP 13 for a warm grey or the influence of blue at CP 53 for a cold grey.

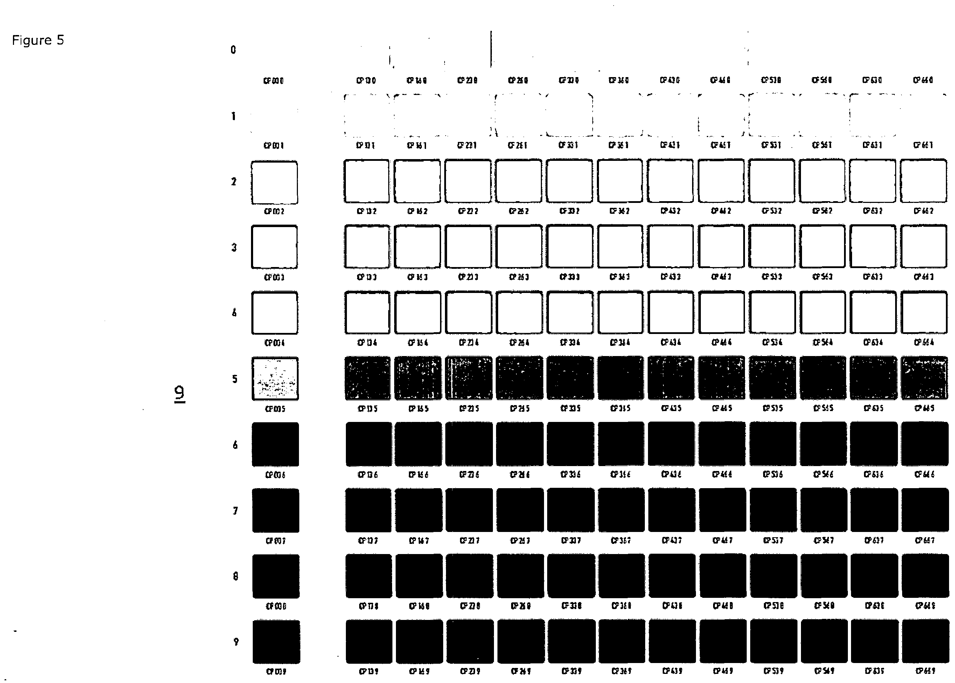

The grey shades are, just like the subfamilies, shown on a matrix of the grey shade matrix 9 (see figure 5).

The axis of this matrix is subdivided into nine steps, just like at the subfamily matrix. Each grey shade is, just like a color, provided with a unique identification code. Contrary to the colors, no indication of style, type and/or culture is given to the grey shades. With these 130 white, black and grey shades, the color intensity is namely too low to determine this.

The ten neutral grey shades are shown in a first column and receive an identification code beginning with 00. The code of the 120 other hues starts with the two figures of the family to which they belong, followed by a degree of greying according to a scale of 0 to 9. For example, CP G 13 5 has a grey level of 5 on the scale of 0 to 9 and is a warm grey. Horizontally, they are classified based on color influence, and they go from color family 13 (left) to family 66 (right).

These grey shades do not possess enough color to evoke an emotion or to appeal our brains and are thus considered as neutral and universal.

As indicated, colors can be divided into particular groups of clusters, depending on style, type, culture, etc.

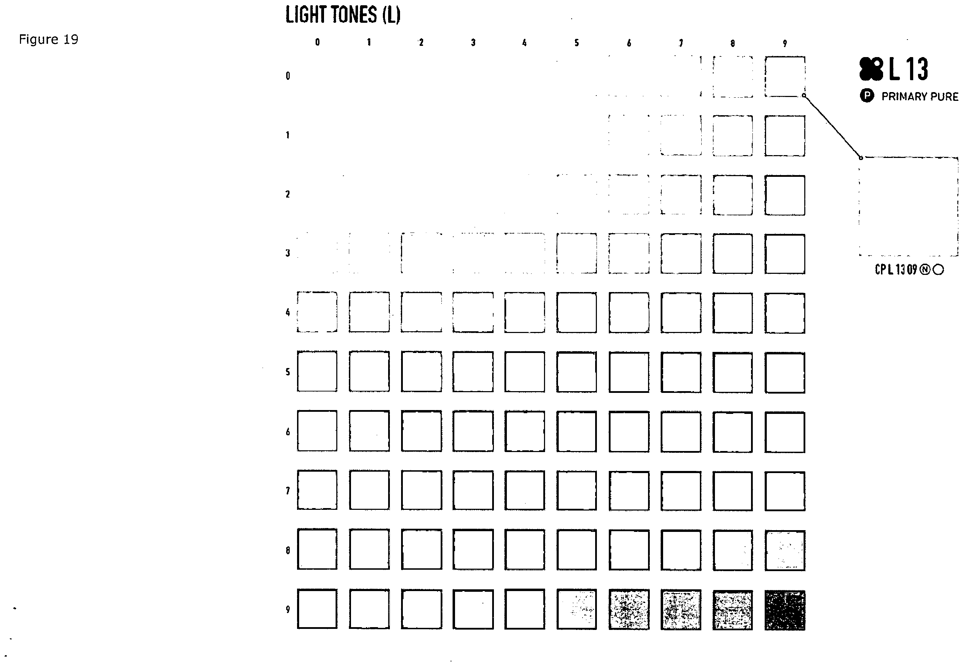

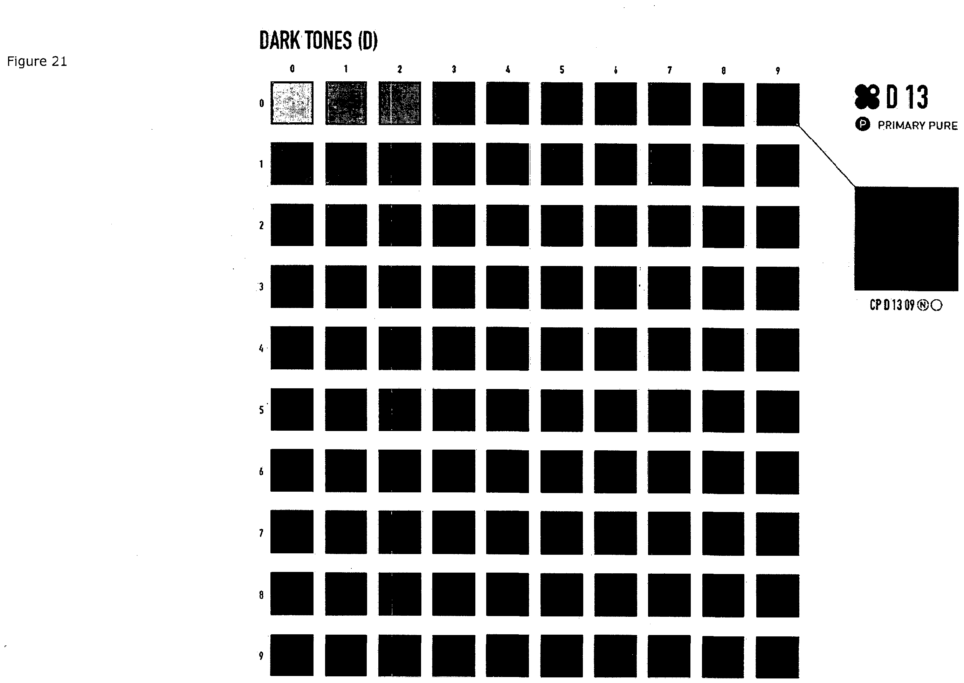

Figures 19 and 21 show a matrix of respectively light (L) tones and dark (D) tones linked to a subfamily of a color. These L and D tones are also divided on a matrix in which its position is determined by chroma and grey level, both keeping a unique ratio.

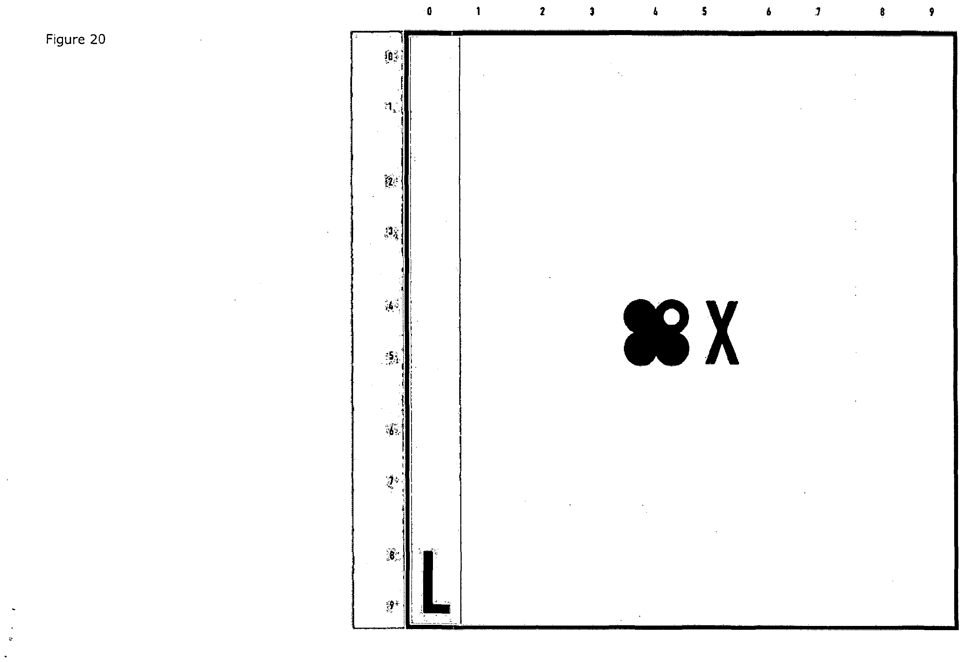

Figure 20 shows the position of the Light tones with respect to a corresponding subfamily matrix. The light tones are located at the left side of the matrix, and partially outside the matrix.

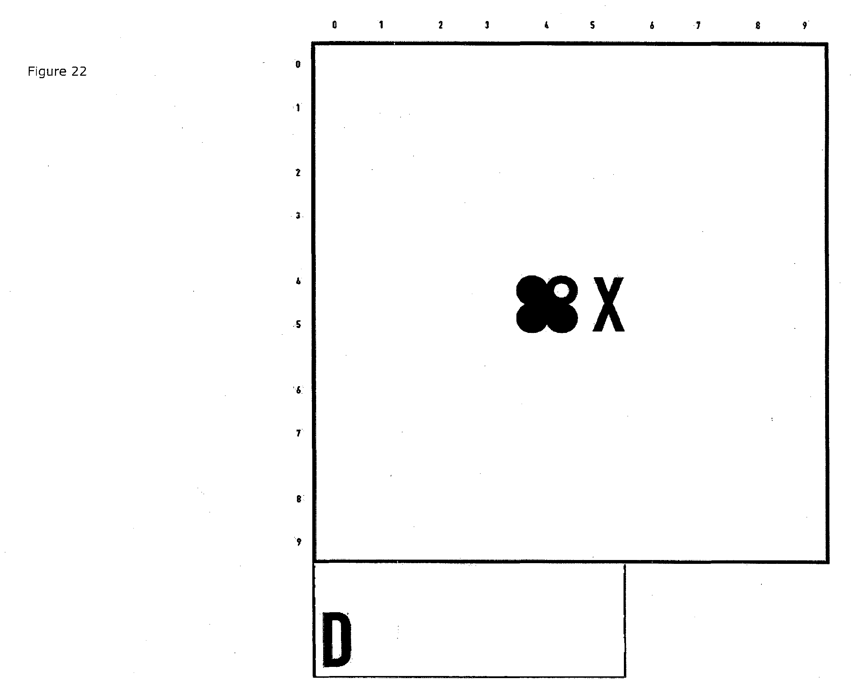

Figure 22 shows the position of the dark tones with respect to the corresponding subfamily matrix. These dark tones are located at the left lower corner of the matrix, and especially outside the matrix.

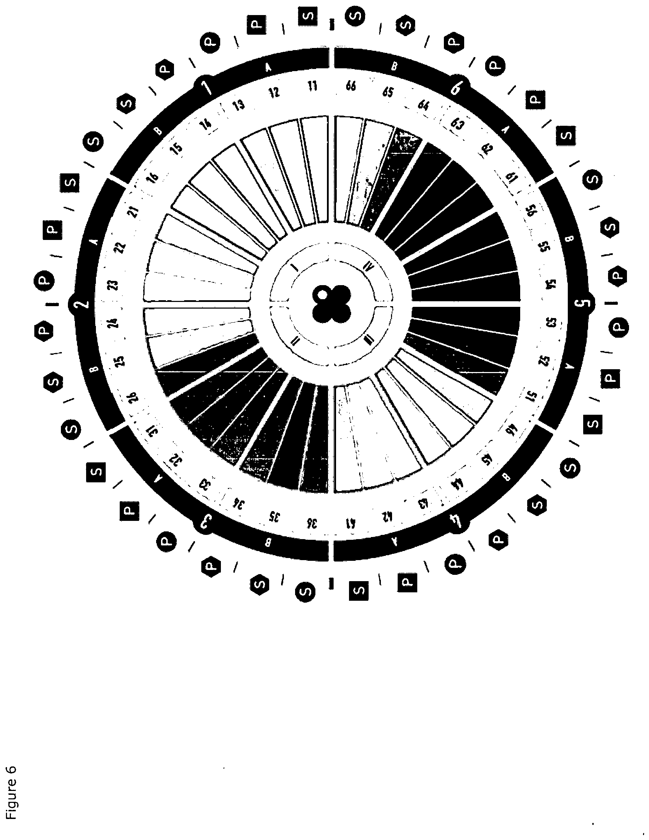

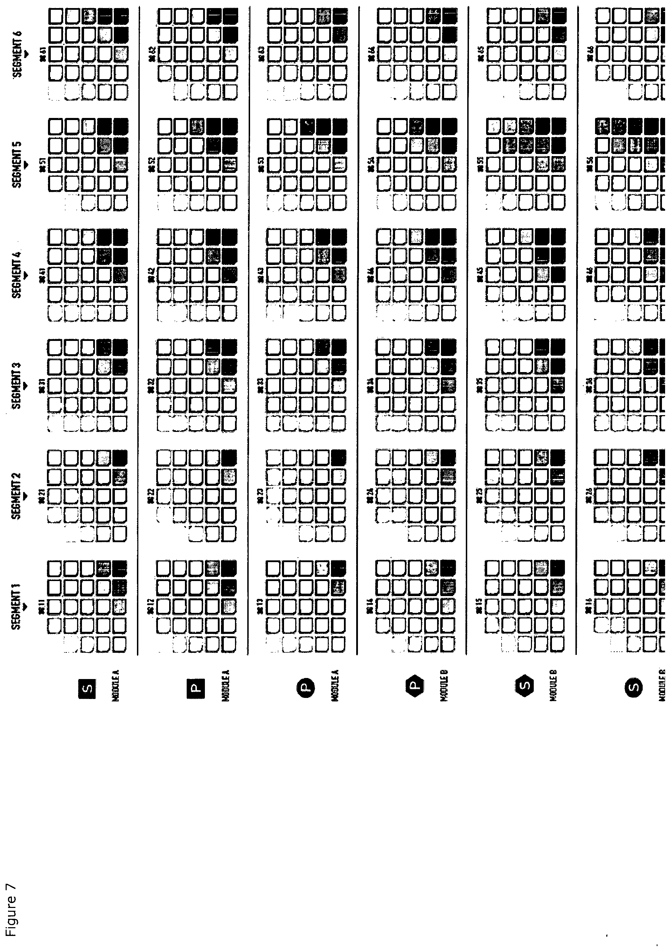

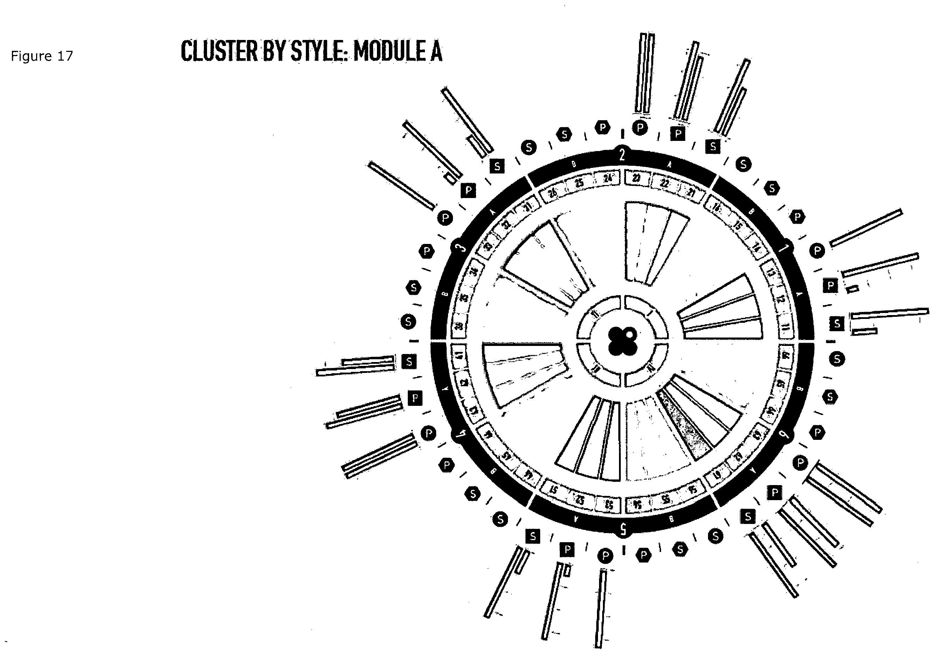

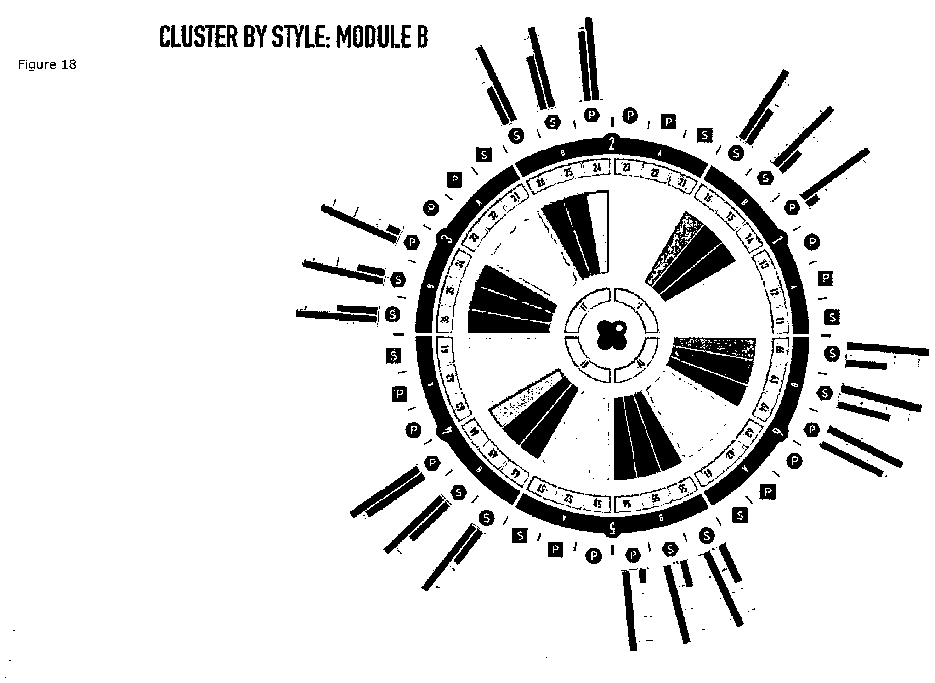

Figure 6 shows a color circle according to the present invention, in which it is indicated to which style and substyle a family belongs. The indication is realized by means of icons, in which each substyle has its own icon. The repartition uses two main styles (on the circle indicated as P and S), subdivided into three substyles. In total, 6 substyles can thus be identified, in which each first to sixth family (included) of a segment will be assigned to a style. This shown in more detail in figure 7, in which each family (indicated by 25 main color clusters) is clearly subdivided into a particular style. Figures 17 and 18 respectively show how the RGB values determine the clustering per style, in which figure 17 shows style clustering for module A and figure 18 shows this for module B. Clustering per style is consequently scientifically founded and is strongly influenced by the perception of color by our brains.

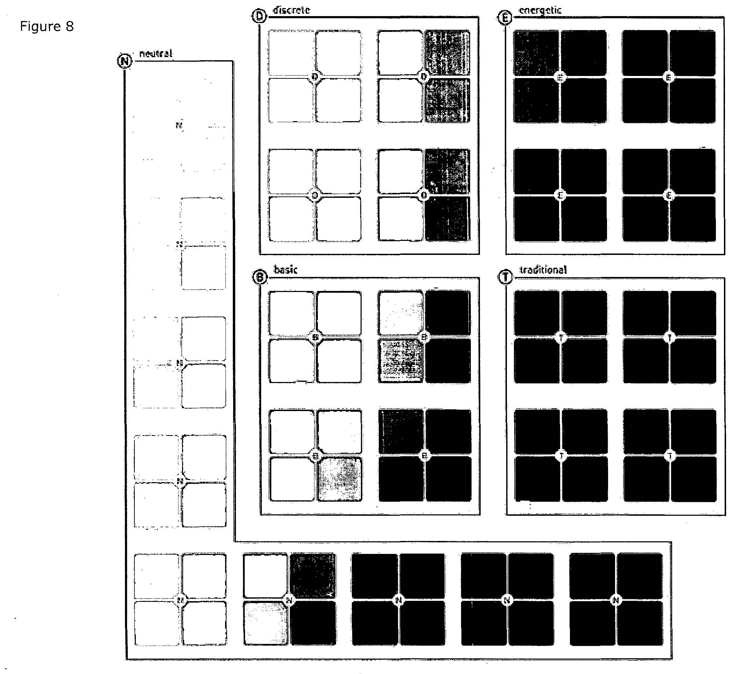

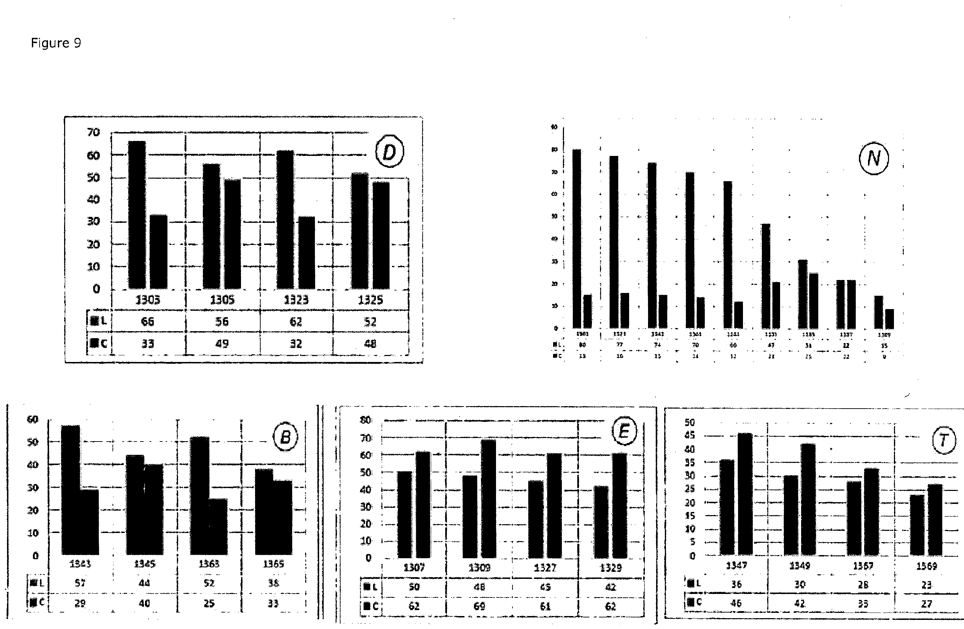

Colors can also be classified according to the type. In figure 8, the classification of a color subfamily is shown in 5 type clusters each consisting of some color clusters. Classification according to types is based on the characteristics of the colors. Figure 9 shows the scientific basis of the classification according to type by means of graphs in which the brightness and color degree of saturation of chroma in a type is shown (plotted for some reference colors of the type). Colors indicated as type N are neutral colors with a decreasing brightness (L) and a low color degree of saturation of chroma (C).

Colors indicated as type D have a moderate brightness L and density C. Colors indicated as type E have a moderate brightness and high color degree of saturation of chroma. Colors indicated as type B have a moderate brightness and a low density while colors indicated as type T have a low brightness and moderate to high color degree of saturation of chroma.

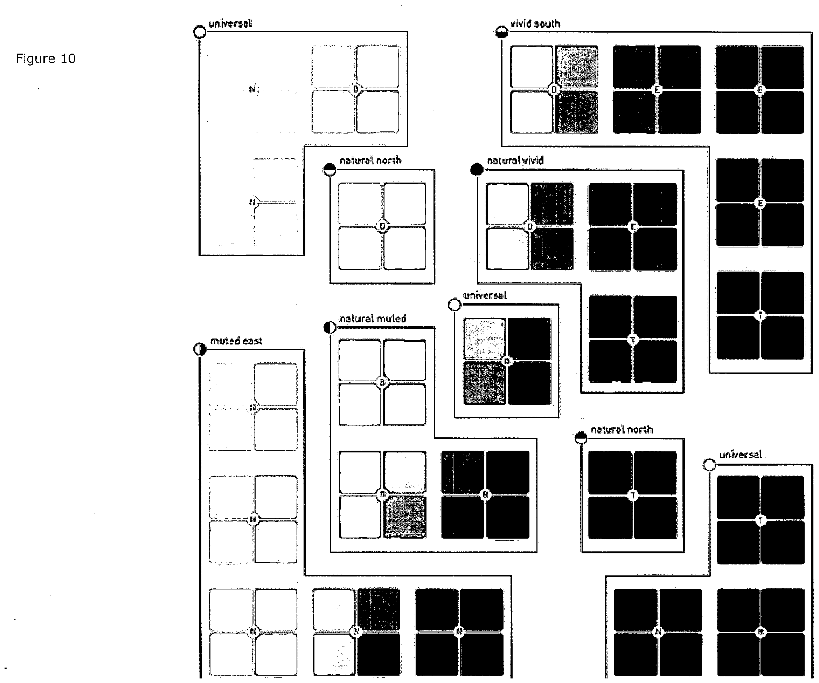

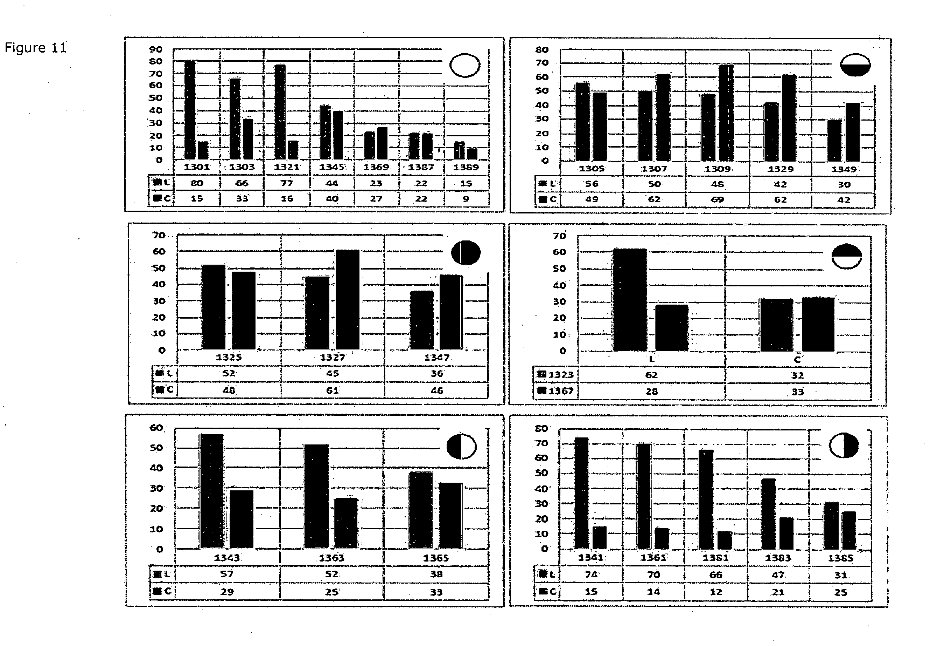

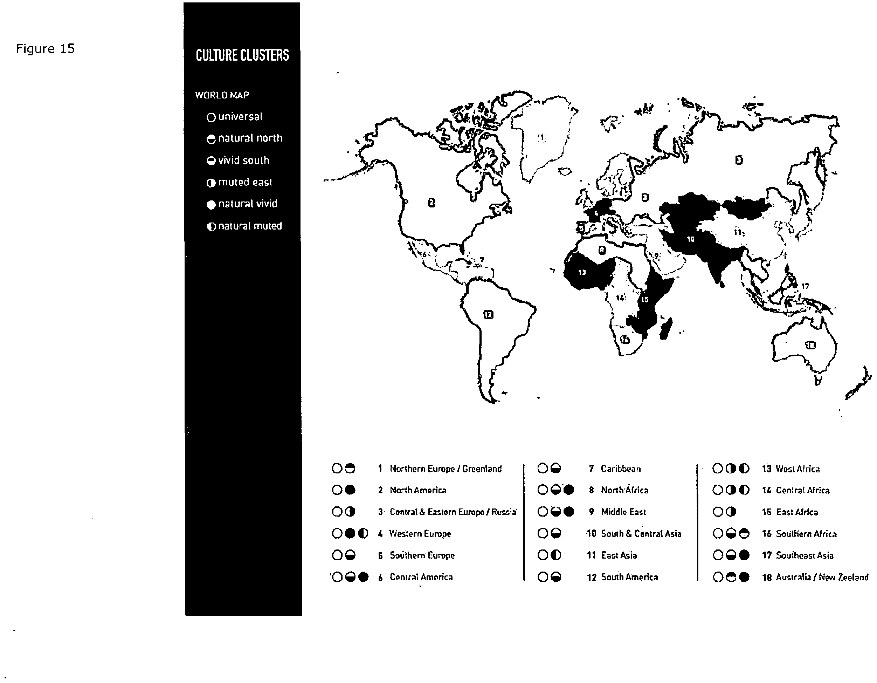

Figure 10 shows an example of how colors can be grouped based on culture. In the example of figure 10, the family members are classified into 6 culture groups, each with a specific denomination typical of the culture (e.g. muted east, universal, natural north, natural vived, vived south, natural muted). Different cultures can also be indicated by different symbols or codes. Figure 11 shows the scientific basis for the classification according to color culture. Colors from culture 1 (indicated with a circle, also called universal colors) have a decreasing brightness (L) and a low density (C). Colors from culture II (symbol with a filled half of a circle in the bottom, vived south) have a natural to high brightness with a high density. Colors from culture III (filled circle, natural vived) have a natural moderate brightness and moderate density. Colors from culture IV (filled half of a circle in the upper part, natural north) are natural colors with a moderate to low brightness and density. Colors from culture IV (filled half of a circle at the left, natural muted) are natural dimmed colors with a moderate to low density. Colors from culture VI (filled half of a circle at the right, muted east) are colors with decreasing brightness depending on an increasing low density. Figure 15 shows a geographical chart with indication of the preferred cultures per region. This is amongst other things dependent on the position of the sun and the climate of the region (next to other causes such as historical, political and economic reasons).

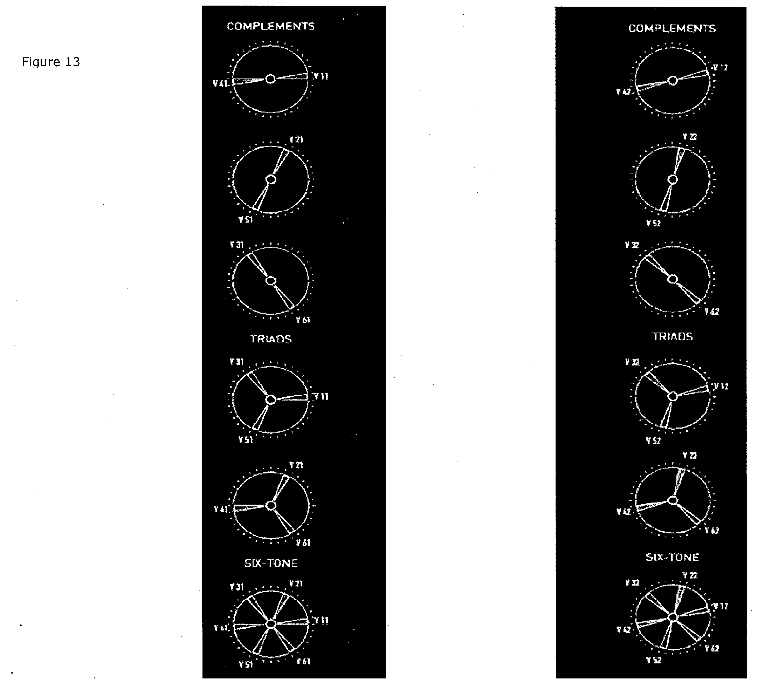

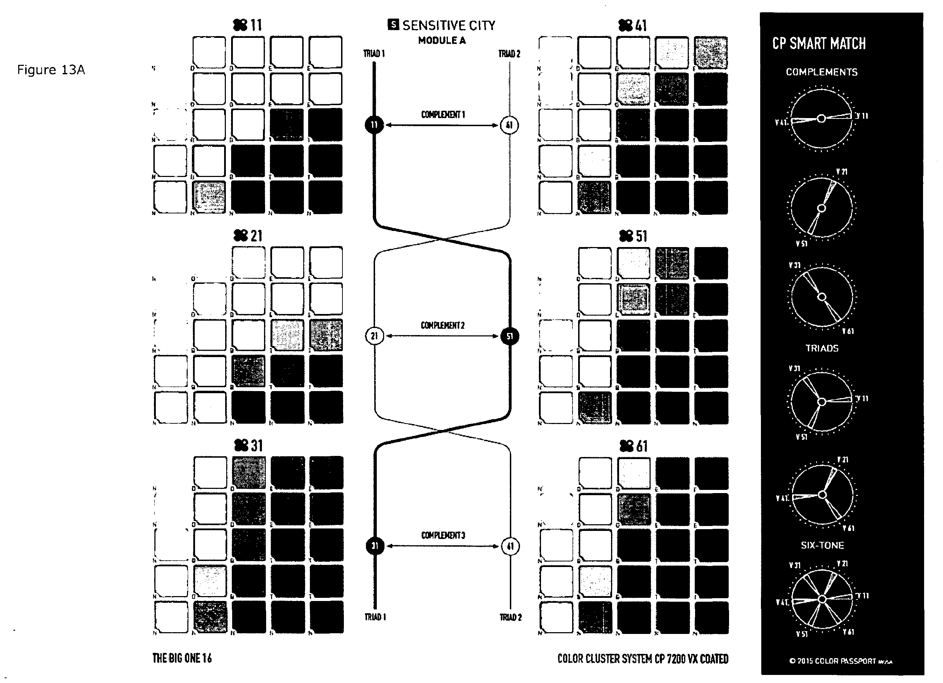

Figure 13 shows an example of possible combinations, harmonies and complements that can be made.

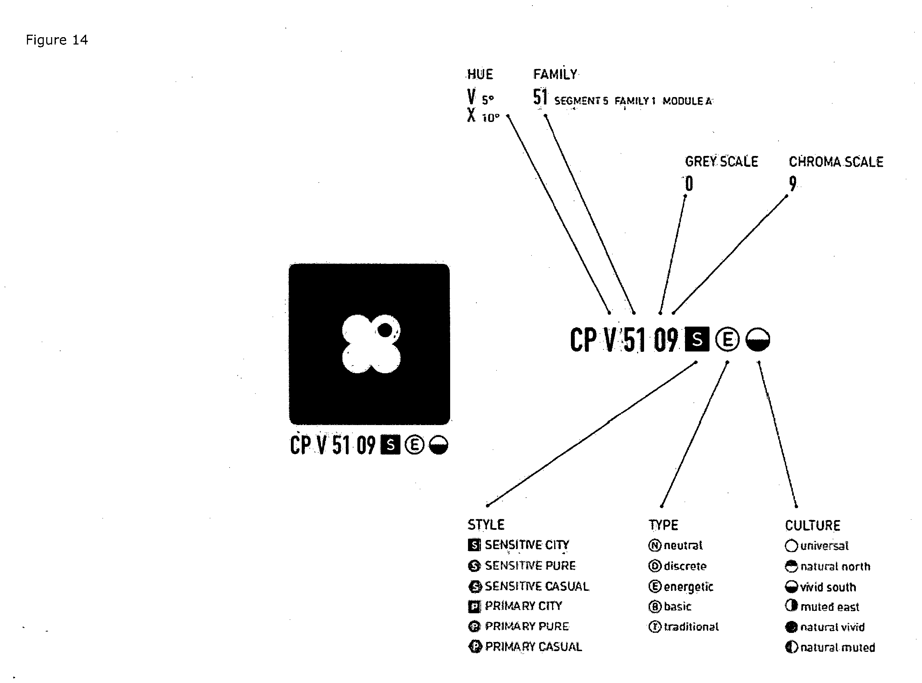

Figure 14 is an example of a possible color identification code according to the present invention. The code preferably contains a reference to the segment and to the family to which the colors belongs, as well as to the scale of the chroma and grey level of the color. The code can also contain a reference to the color angle. In a further embodiment, the code can contain a reference to the type, style and/or culture. This is preferably a symbol, whether or not combined with a letter.

The invention is extremely appropriate for making good combinations and harmonies between different colors. Below, some examples are given.

For all the combinations discussed below, we always assume a perfect harmony (perfect match) or the smart harmony (smart match).

With a perfect match, we mean a color combination within the same color cluster, both in the own family and in the other family (for example at a complement CP 21 09 and CP 51 09, + 30 or exact 3 segments of 60° thus 180°). This the classic way of combining colors.

In case of a smart match, we have a broader color combination based on one of the acceptable combinations. It is hereby possible to combine V and X within the complete family (for example CP 21 51 and 51 08). Another possibility to make a smart match is based on the culture and type clusters.

Module harmonies

Each segment consists of an A module (families ending in 1, 2 and 3) and a B module (families ending in 4, 5 and 6). When combining colors, it is recommended not to mix A and B modules. Combinations of colors from the neighbouring modules are also not recommended. This is only an advice, there is of course always freedom of choice. Each module is namely located at the turning point of one of the colors, that is the main influence on one color by one of the primaries switches to the next primary color. By means of the turning point and on the one side the decreasing influence and increasing influence of the next main color, the colors enter our brains in a blurred way. The wave lengths within one segment mainly run parallel or synchroinised and stimulate our stimuli in a pleasant way. Taking into account these modules, it is possible to make a very broad range of color combinations without thinking too much. The modules are especially relevant when making a split complement or tone-on-tone combination. While classic systems of harmony will allow a split complement at both sides, it is within the present invention only possible to allow a split complement if the basic color is not in a family situated at the edge of the module. Because then, the split complement is only recommended in the module at the opposite side, but inside the module.

Within a broader color pallet, for example in case of trendy colors of the season, colors from module A and module B can be used next to each other. However, for the application on one design, the colors from one same module (thus either only A, or only B) are best combined with each other.

For the third segment, there is an exception to this rule. There are so many hues of green that the turning point is hardly perceivable. In this case, it is thus possible to exceed module A and module B at a tone-on-tone or a split complement or any other combination.

There is also another exception to the rule in the second segment, in which yellow is so sensitive to the influence of red and green that the turning point really has a huge impact. It is thus strongly not recommended within the second segment to combine module A and B into one single color combination.

Style cluster harmony

Designs within one style are of course very recognizable for a consumer. A collection made of families all ending in 5 will be very much balanced. Combining colors from different families with another style can also be interesting and offers an additional layered aspect, as long as styles within the same module are used. Colors from families ending in 3 can for example be combined with a family ending in 2 or a family ending in 1. On the other hand, a family ending in 6 can be combined with a family ending in 5 and a family ending in 4.

Type cluster harmony

By combining colors from two different subtypes, color combinations are created in which the colors intensify each other and are therefore more interesting. Two families from the same "type" of colors shown together, form a more equal and decent image.

Combinations with colors from three subtypes on the other hand offer a chaotic image and are perceived by our brains as unpleasant. There, it is recommended never to combine more than two subtypes.

Culture cluster harmony

When we combine colors from different culture clusters, it is important to always remember the rule that colors must always come from adjacent clusters. Each culture cluster can by definition be combined with a universal color. Vivid South and Muted East cannot be combined because they are opposites. Natural North can however be used with Vived south or with Muted East.

Color nuancinq

A nuance is an adjacent color with a same family. There is a perfect nuance when one stays within a color cluster of the chosen color. For example a combination of CP 13 04 and CP 13 05. With the tools according to the present invention, acceptable nuances can be made within the complete family (for example CP 13 04, CP 13 78 and CP 13 45) or refined by taking into account the type or culture clusters. When we make nuances within the same family with bigger intervals of color degree of saturation of chroma or grey level, we call it quality contrast.

Tone-on-tone

A tone-on-tone is also a combination of adjacent colors, however from the adjacent family. The perfect tone-on-tone combination of CP 13 09 is CP 12 08 because it is part of another family, but lies within the same cluster.

With the tools according to the present invention, all colors from the family 12 can be used or be refined to colors within the same type and/or culture cluster. An acceptable tone-on-tone for CP 13 09 can be combined with all colors from family 12, whether or not taking into account the type or culture.

However, a tone-on-tone combination preferably stays within the same module.

Color complement

The present invention makes it very easy to find a perfect color complement. In the color circle, the complementary color is situated at the opposite side on the CP circle and thus three segments separated from 60°. Color complements can easily be found based on the navigation and numbering by adding or subtracting 30 to or from the first two numbers of the code (cf. the color family). In this way, one can thus immediately find the complement for each product of the system in the book, a range of each visualisation. This is a very big step in working with colors.

Color split complement

Split complements are in principle the adjacent colors of the complement (the colors with the same coordinates from the neighbouring families of the complement). When combining split complements it is, just as for tone-on-tone, essential to stay within the module. When a originating color is not in the middle family of a module, it will thus only have one split complement, namely the one inside the same module as the complement.

Triad

A triad consists of three colors, or the originating color and two additional colors. They are situated exactly two segments (or 120 degrees) from each other and can be found by adding or subtracting 20 to or from the code for the color family.

Multi color 6-tone

A multi color 6-tone consists of six colors each separated by a segment (or 60°). Multi color 6-tones are often used when printing tissues and are also called multi color. A perfect multi color 6-tone with as a basis CP 11 45 is thus 12 45, 13 45, 14 45, 15 45 and 16 45 (thus + or - 10).

Figure 13A is an example of a reproduction of how complements can be made within different families. Figure 13A show all the first families within the six different segments (indicated by means of their 25 cluster heads and their code) and shows the possible multi color 6-tones, triads and complements.

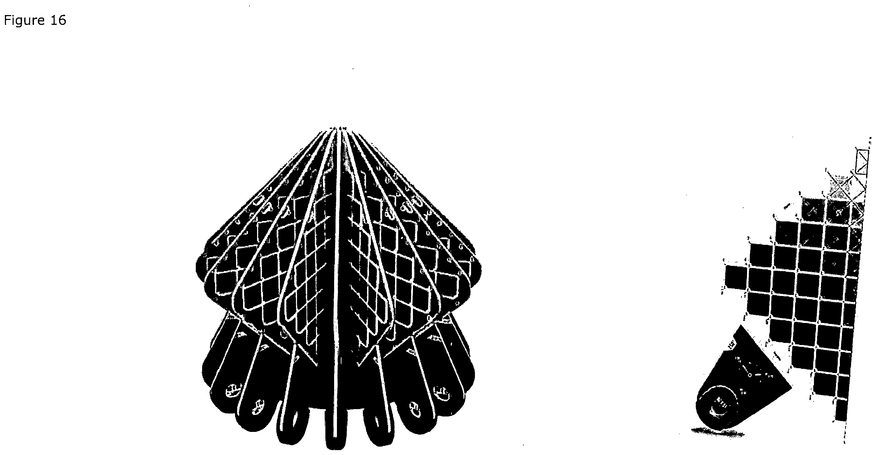

Figure 16 is an example of a possible color identification tool according to the present invention. The tool allows identification and classification of a color according to the present invention.

It will be understood that the present invention is not limited to the embodiments described above and that some adjustments or changes can be added to the described examples without changing the scope of the enclosed claims.

## Claims

1. A method for classifying colors and grey shades, comprising the classification of colors in a matrix, in which the colors in the matrix belong to a same subfamily and have the same hue value, said subfamily on its turn belonging to a family, each family having two subfamilies, and in which the position of a color in the matrix is determined by the chroma value and the grey value of the color, wherein the scale for the chroma value as well as the scale for the grey value are linear, in which the scale of the grey value depends on the scale of the chroma value and in which the greying steps are dynamic in function of the chroma value, said greying steps increase with each increasing chroma value, **characterised in that** said families are grouped into segments, in which each segment comprises 6 families, said segments are visualised on a circle, wherein each segment covers 60° of the circle.

2. Method according to claim 1, **characterised in that** the scale for the chroma value will change in steps of 10, in which 10 is the minimum and 100 is the maximum.

3. Method according to any one of the preceding claims, in which the grey value is indicated on a vertical axis of the matrix and the chroma value on a horizontal axis of the matrix.

4. Method according to any of the preceding claims, **characterised in that** said family comprises two subfamilies with a difference in color angle or hue of 5°C.

5. Method according to any one of the preceding claims, **characterised in that** within a subfamily, the color with the highest chroma value and the lowest grey value is indicated as the main color of the subfamily.

6. Method according to any one of the preceding claims, in which the color subfamily is subdivided into color clusters, each color cluster comprising 4 colors, in which the colors in a color cluster differ maximum one grey level degree and/or one color degree of saturation of chroma degree from each other.

7. Method according to any one of the preceding claims, **characterised in that** said segments are arranged in order of perception of color by the brain.

8. Method according to claim 7, in which the segments are subdivided into two modules which cover an angle of 30°, and in which each module comprises 3 families.

9. Method according to any one of the preceding claims, in which a parameter is assigned to each family, in which the parameter is an indication of the position of the family on the circle and/or color angle of the family and wherein a parameter is assigned to each color, in which the parameter comprises a reference to the color family to which the color belongs and a reference to the grey value and the chroma value of the color.

10. Method according to any one of the preceding claims, in which the main colors of a family are shown on the outer scale of the color circle, as a representation of the family to which they belong.

11. A color chart for classifying colors and grey shades, in which the color chart comprises a matrix, in which the colors in the matrix belong to a same subfamily and have the same hue value, said subfamily on its turn belonging to a family, each family having two subfamilies, and in which the position of a color in the matrix is determined by the chroma value and the grey value of the color, **characterised in that** the scale for the chroma value and the scale for the grey value are linear, wherein the scale for the grey value depends on the scale for the chroma value and wherein the greying steps are dynamic in function of the color degree of saturation of chroma, said greying steps increasing with each increasing chroma value, **characterised in that** said color chart further comprises a color circle with segments, said each segment covers 60° of said circle and said each segment is subdivided in 6 color families.

12. Color chart according to claim 11, **characterised in that** the scale for the chroma value changes in steps of 10, in which 10 is the minimum and 100 is the maximum and whereby a vertical axis of the matrix indicates the grey value and a horizontal axis the chroma value.

13. Color chart according to any one of the preceding claims, **characterized in that** each family consists of 200 colors and wherein the segments are subdivided into two modules which cover an angle of 30° and each consist of 3 families.

14. A computer implemented program, comprising an interface for identifying, classifying, combining, harmonising and/or nuancing colors, **characterised in that** the computer program is programmed to carry out the method of any one of the preceding claims 1 to 10.

## Patentansprüche

1. Verfahren zum Klassifizieren von Farben und Graustufen, das Klassifizieren von Farben in einer Matrix umfassend, wobei die Farben in der Matrix zur gleichen Unterfamilie gehören und den gleichen Farbwert aufweisen, wobei die Unterfamilie wiederum zu einer Familie gehört, wobei jede Familie zwei Unterfamilien aufweist und wobei die Position einer Farbe in der Matrix durch den Chroma-Wert und den Grauwert der Farbe bestimmt wird, wobei die Skala für den Chroma-Wert wie auch die Skala für den Grauwert linear sind, wobei die Skala des Grauwertes von der Skala des Chroma-Wertes abhängt und wobei die Vergrauungsschritte in Abhängigkeit von dem Chroma-Wert dynamisch sind, wobei die Vergrauungsschritte mit jedem zunehmenden Chroma-Wert zunehmen, **dadurch gekennzeichnet,**

**dass** die Familien zu Segmenten gruppiert werden, wobei jedes Segment 6 Familien umfasst und die Segmente auf einem Kreis visualisiert werden, wobei jedes Segment 60° des Kreises bedeckt.

2. Verfahren nach Anspruch 1, **dadurch gekennzeichnet, dass** sich die Skala für den Chroma-Wert in 10er-Schritten ändern wird, wobei 10 das Minimum und 100 das Maximum ist.

3. Verfahren nach einem der vorhergehenden Ansprüche, wobei der Grauwert auf einer vertikalen Achse der Matrix und der Chroma-Wert auf einer horizontalen Achse der Matrix angegeben werden.

4. Verfahren nach einem der vorhergehenden Ansprüche, **dadurch gekennzeichnet, dass** die Familie zwei Unterfamilien mit einem Unterschied im Farbwinkel oder Farbwert von 5 ° umfasst.

5. Verfahren nach einem der vorhergehenden Ansprüche, **dadurch gekennzeichnet, dass** innerhalb einer Unterfamilie die Farbe mit dem höchsten Chroma-Wert und dem niedrigsten Grauwert als die Hauptfarbe der Unterfamilie angegeben wird.

6. Verfahren nach einem der vorhergehenden Ansprüche, wobei die Farbunterfamilie in Farbgruppen unterteilt werden, wobei jede Farbgruppe 4 Farben umfasst, wobei sich die Farben in einer Farbgruppe um maximal ein Graustufengrad und/oder ein Farbgrad der Sättigung des Chroma-Grades voneinander unterscheiden.

7. Verfahren nach einem der vorhergehenden Ansprüche, **dadurch gekennzeichnet, dass** die Segmente in der Reihenfolge der Wahrnehmung von Farbe durch das Gehirn angeordnet werden.

8. Verfahren nach Anspruch 7, wobei die Segmente in zwei Module unterteilt werden, die einen Winkel von 30° abdecken und wobei jedes Modul 3 Familien umfasst.

9. Verfahren nach einem der vorhergehenden Ansprüche, wobei jeder Familie ein Parameter zugewiesen wird, wobei der Parameter eine Angabe der Position der Familie auf dem Kreis und/oder des Farbwinkels der Familie ist und wobei jeder Farbe ein Parameter zugewiesen wird, wobei der Parameter einen Bezug auf die Farbfamilie, zu der die Farbe gehört, und einen Bezug auf den Grauwert und den Chroma-Wert der Farbe umfasst.

10. Verfahren nach einem der vorhergehenden Ansprüche, wobei die Hauptfarben einer Familie auf der äußeren Skala des Farbkreises als Darstellung der Familie, zu der sie gehören, gezeigt werden.

11. Farbtafel zum Klassifizieren von Farben und Graustufen, wobei die Farbtafel eine Matrix umfasst, wobei die Farben in der Matrix zur gleichen Unterfamilie gehören und den gleichen Farbwert aufweisen, wobei die Unterfamilie wiederum zu einer Familie gehört, wobei jede Familie zwei Unterfamilien aufweist und wobei die Position einer Farbe in der Matrix durch den Chroma-Wert und den Grauwert der Farbe bestimmt wird, **dadurch gekennzeichnet, dass** die Skala für den Chroma-Wert und die Skala für den Grauwert linear sind, wobei die Skala für den Gauwert von der Skala für den Chroma-Wertes abhängt und wobei die Vergrauungsschritte in Abhängigkeit von dem Farbgrad der Sättigung des Chroma dynamisch sind, wobei die Vergrauungsschritte mit jedem zunehmenden Chroma-Wert zunehmen, **dadurch gekennzeichnet, dass** die Farbtafel ferner einen Farbkreis mit Segmenten umfasst, wobei jedes Segment 60° des Kreises bedeckt und jedes Segment in 6 Familien unterteilt ist.

12. Farbtafel nach Anspruch 11, **dadurch gekennzeichnet, dass** sich die Skala für den Chroma-Wert in 10er-Schritten ändert, wobei 10 das Minimum und 100 das Maximum ist und wobei eine vertikale Achse der Matrix den Grauwert und eine horizontale Achse den Chroma-Wert angibt.

13. Farbtafel nach einem der vorhergehenden Ansprüche, **dadurch gekennzeichnet, dass** jede Familie aus 200 Farben besteht und wobei die Segmente in zwei Module unterteilt sind, die einen Winkel von 30° abdecken und jeweils aus 3 Familien bestehen.

14. Computerimplementiertes Programm, eine Schnittstelle zum Identifizieren, Klassifizieren, Kombinieren, Harmonisieren und/oder Nuancieren von Farben umfassend, **dadurch gekennzeichnet, dass** das Computerprogramm dafür programmiert ist, das Verfahren nach einem der Ansprüche 1 bis 10 auszuführen.

## Revendications

1. Procédé de classification de couleurs et de tonalités de gris, comprenant la classification de couleurs dans une matrice, dans lequel les couleurs dans la matrice appartiennent à une même sous-famille et ont la même valeur de teinte, ladite sous-famille appartenant à son tour à une famille, chaque famille comportant deux sous-familles, et dans lequel la position d'une couleur dans la matrice est déterminée par la valeur chromatique et la valeur de gris de la couleur, dans lequel l'échelle pour la valeur chromatique ainsi que l'échelle pour la valeur de gris sont linéaires, dans lequel l'échelle de la valeur de gris dépend de l'échelle de la valeur chromatique et dans lequel les étapes de désaturation sont dynamiques en fonction de la valeur chromatique, lesdites étapes de désaturation augmentent avec chaque augmentation de la valeur chromatique, **caractérisé en ce que** lesdites familles sont groupées en segments, dans lequel chaque segment comprend 6 familles, lesdits segments sont visualisés sur un cercle, dans lequel chaque segment couvre 60° du cercle.

2. Procédé selon la revendication 1, **caractérisé en ce que** l'échelle pour la valeur chromatique changera en étapes de 10, dans lequel 10 est le minimum et 100 est le maximum.

3. Procédé selon l'une quelconque des revendications précédentes, dans lequel la valeur de gris est indiquée sur un axe vertical de la matrice et la valeur chromatique sur un axe horizontal de la matrice.

4. Procédé selon l'une quelconque des revendications précédentes, **caractérisé en ce que** ladite famille comprend deux sous-familles présentant une différence d'angle chromatique ou de teinte de 5 °.

5. Procédé selon l'une quelconque des revendications précédentes, **caractérisé en ce qu'**à l'intérieur d'une sous-famille, la couleur présentant la valeur chromatique la plus élevée et la valeur de gris la plus basse est indiquée comme étant la couleur principale de la sous-famille.

6. Procédé selon l'une quelconque des revendications précédentes, dans lequel la sous-famille de couleurs est subdivisée en groupes de couleurs, chaque groupe de couleurs comprenant 4 couleurs, dans lequel les couleurs dans un groupe de couleurs diffèrent au maximum d'un degré de niveau de gris et/ou d'un degré de couleur de saturation chromatique les unes des autres.

7. Procédé selon l'une quelconque des revendications précédentes, **caractérisé en ce que** lesdits segments sont agencés par ordre de perception des couleurs par le cerveau.

8. Procédé selon la revendication 7, dans lequel les segments sont subdivisés en deux modules qui couvrent un angle de 30°, et dans lequel chaque module comprend 3 familles.

9. Procédé selon l'une quelconque des revendications précédentes, dans lequel un paramètre est attribué à chaque famille, dans lequel le paramètre est une indication de la position de la famille sur le cercle et/ou un angle chromatique de la famille et dans lequel un paramètre est attribué à chaque couleur, dans lequel le paramètre comprend une référence à la famille de couleurs à laquelle la couleur appartient et une référence à la valeur de gris et à la valeur chromatique de la couleur.

10. Procédé selon l'une quelconque des revendications précédentes, dans lequel les couleurs principales d'une famille sont montrées sur l'échelle externe du cercle chromatique, en tant que représentation de la famille à laquelle elles appartiennent.

11. Diagramme de couleurs pour la classification de couleurs et de tonalités de gris, dans lequel le diagramme de couleurs comprend une matrice, dans lequel les couleurs dans la matrice appartiennent à une même sous-famille et ont la même valeur de teinte, ladite sous-famille appartenant à son tour à une famille, chaque famille comportant deux sous-familles, et dans lequel la position d'une couleur dans la matrice est déterminée par la valeur chromatique et la valeur de gris de la couleur, **caractérisé en ce que** l'échelle pour la valeur chromatique et l'échelle pour la valeur de gris sont linéaires, dans lequel l'échelle pour la valeur de gris dépend de l'échelle pour la valeur chromatique et dans lequel les étapes de désaturation sont dynamiques en fonction du degré de couleur de saturation chromatique, lesdites étapes de désaturation augmentant avec chaque augmentation de la valeur chromatique, **caractérisé en ce que** ledit diagramme de couleurs comprend en outre un cercle chromatique comportant des segments, ledit chaque segment couvre 60° dudit cercle et ledit chaque segment est subdivisé en 6 familles de couleurs.

**12.** Diagramme de couleurs selon la revendication 11, **caractérisé en ce que** l'échelle pour la valeur chromatique change en étapes de 10, dans lequel 10 est le minimum et 100 est le maximum et moyennant quoi un axe vertical de la matrice indique la valeur de gris et un axe horizontal la valeur chromatique.

**13.** Diagramme de couleurs selon l'une quelconque des revendications précédentes, **caractérisé en ce que** chaque famille est constituée de 200 couleurs et dans lequel les segments sont subdivisés en deux modules qui couvrent un angle de 30° et chacun est constitué de 3 familles.

**14.** Programme mis en œuvre par ordinateur, comprenant une interface pour identifier, classer, combiner, harmoniser et/ou nuancer les couleurs, **caractérisé en ce que** le programme informatique est programmé pour réaliser le procédé selon l'une quelconque des revendications précédentes 1 à 10.

# Figures

Figure 1

360°
330°
300°
270°
240°
210°
180°
150°
120°
90°
60°
30°
1
2
3
4
5
6
A
B
I
II
III
IV

SEGMENT 1
MODULE 6A
FAMILY 57
QUADRANT 2
360°
90°
270°
180°
FAMILY CLUSTER
FAMILY CLUSTER HEAD
V 51
PROPERTY CLUSTER
PROPERTY CLUSTER HEAD
COLOR CLUSTER
COLOR CLUSTER HEAD
1
2
3
4
5
6
7

Figure 2

3
4
2
CHROMA
deep tones
natural tones
mid tones
soft tones
light tones
pure
muted
GREY SCALE

Figure 3

0
1
2
3
4
5
6
7
8
9
53
56
63
66
CP GREY AXE DETAIL
CP GREY AXE
GREYSCALE
GREYSCALE
CP COLOR CIRCLE
BLACK
CP COLOR SPACE

Figure 4

Figure 5

11
12
13
14
15
16
21
22
23
24
25
26
31
32
33
34
35
36
41
42
43
44
45
46
51
52
53
54
55
56
61
62
63
64
65
66
I
II
III
IV
1
2
3
4
5
6
A
B
P
S

Figure 6

SEGMENT 1
SEGMENT 2
SEGMENT 3
SEGMENT 4
SEGMENT 5
SEGMENT 6
S
MODULE A
P
MODULE A
P
MODULE A
P
MODULE B
S
MODULE B
S
MODULE B

Figure 7

E energetic
T traditional
D discrete
B basic
N neutral


Figure 8

D
1303 66 33
1305 56 49
1323 62 32
1325 52 48
L
C
N
B
1343 57 29
1345 44 40
1363 52 25
1365 38 33
E
1307 50 62
1309 48 69
1327 45 61
1329 42 62
T
1347 36 46
1349 30 42
1367 28 33
1369 23 27

Figure 9

vivid south
natural vivid
universal
natural north
universal
natural north
natural muted
universal
muted east

Figure 10

1305 1307 1309 1329 1349
L 56 50 48 42 30
C 49 62 69 62 42
L C
1323 62 32
1367 28 33
L 74 70 66 47 31
C 15 14 12 21 25
1301 1303 1321 1345 1369 1387 1369
L 80 66 77 44 23 22 15
C 15 33 16 40 27 22 9
1325 1327 1347
L 52 45 36
C 48 61 46
1343 1363 1365
L 57 52 38
C 29 25 33

Figure 11

Segment 1
Segment 2
Segment 3
Segment 4
Segment 5
Segment 6
module A
module B
S
P
R G B
300
200
100
0
CP11 CP12 CP13 CP14 CP15 CP16
CP21 CP22 CP23 CP24 CP25 CP26
CP31 CP32 CP33 CP34 CP35 CP36
CP41 CP42 CP43 CP44 CP45 CP46
CP51 CP52 CP53 CP54 CP55 CP56
CP61 CP62 CP63 CP64 CP65 CP66

Figure 12

COMPLEMENTS
TRIADS
SIX-TONE
V12
V42
V22
V52
V32
V62

COMPLEMENTS
TRIADS
SIX-TONE
V11
V41
V21
V51
V31
V61

Figure 13

11
21
31
41
51
61
SENSITIVE CITY
MODULE A
TRIAD 1
TRIAD 2
COMPLEMENT 1
COMPLEMENT 2
COMPLEMENT 3
THE BIG ONE 16
COLOR CLUSTER SYSTEM CP 7200 VX COATED
CP SMART MATCH
COMPLEMENTS
TRIADS
SIX-TONE
V11
V21
V31
V41
V51
V61
© 2015 COLOR PASSPORT

Figure 13A

Figure 14

HUE
V 5°
X 10°
FAMILY
51 SEGMENT 5 FAMILY 1 MODULE A
GREY SCALE
0
CHROMA SCALE
9
CP V 51 09 S E
CP V 51 09 S E
STYLE
S SENSITIVE CITY
SENSITIVE PURE
SENSITIVE CASUAL
P PRIMARY CITY
PRIMARY PURE
PRIMARY CASUAL
TYPE
N neutral
D discrete
E energetic
B basic
T traditional
CULTURE
universal
natural north
vivid south
muted east
natural vivid
natural muted

Figure 15

CULTURE CLUSTERS

WORLD MAP

- universal
- natural north
- vivid south
- muted east
- natural vivid
- natural muted

1 Northern Europe / Greenland
2 North America
3 Central & Eastern Europe / Russia
4 Western Europe
5 Southern Europe
6 Central America
7 Caribbean
8 North Africa
9 Middle East
10 South & Central Asia
11 East Asia
12 South America
13 West Africa
14 Central Africa
15 East Africa
16 Southern Africa
17 Southeast Asia
18 Australia / New Zeeland

Figure 16

CLUSTER BY STYLE: MODULE A

Figure 17

CLUSTER BY STYLE: MODULE B

Figure 18

LIGHT TONES (L)
L 13
P PRIMARY PURE
CP L 1309
0
1
2
3
4
5
6
7
8
9

Figure 19

Figure 20

DARK TONES (D)
D 13
PRIMARY PURE
CP D 13 09

Figure 21

X
D

Figure 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 1617024 A
- US 7180524 B